# EUROPÄISCHE PATENTSCHRIFT

(11) **EP 1 604 547 B1**
(45) Veröffentlichungstag und Bekanntmachung des Hinweises auf die Patenterteilung: **14.12.2011**
(21) Anmeldenummer: 04718266.2
(22) Anmeldetag: 08.03.2004
(51) Int. Cl.: H05B 3/00, A23L 1/00

(54) **VERFAHREN ZUR THERMISCHEN BEHANDLUNG VON LEBENSMITTELGUT UND VORRICHTUNG ZUR DURCHFÜHRUNG DES VERFAHRENS**
METHOD FOR THERMALLY TREATING FOOD ITEMS AND DEVICE FOR CARRYING OUT SAID METHOD
PROCEDE DE TRAITEMENT THERMIQUE DE PRODUIT ALIMENTAIRE ET DISPOSITIF POUR METTRE EN OEUVRE CE PROCEDE

(30) Priorität: 07.03.2003 DE 10310405
(43) Veröffentlichungstag der Anmeldung: 14.12.2005
(73) Patentinhaber: Ibt.Infrabio Tech Gmbh, 09599 Freiberg (DE)
(72) Erfinder: JOHN, Peter, 09599 Freiberg (DE)
(74) Vertreter: Isenbruck, Günter
(86) Internationale Anmeldenummer: PCT/EP2004/002349
(87) Internationale Veröffentlichungsnummer: WO 2004/080126

(56) Entgegenhaltungen:
- WO-A-03/088309
- US-A- 5 058 196

## Beschreibung

Die vorliegende Erfindung bezieht sich auf Infrarotstrahler für die thermische Behandlung von Gütern, insbesondere von Lebensmitteln.

Es ist bekannt, Infrarotstrahler in Modulbauweise auszuführen und zwar als Stabstrahler mit Reflektor, als Rohrstrahler mit Reflektor oder als Flachstrahler ohne zugeordneten Reflektor. Die Strahlermodule sind als direkt in Anlagen einbaufähige Baugruppen beschaffen, die im Kern aus einem oder mehreren Strahlern bestehen sowie aus Infrarotsensoren zur Messung der Guttemperatur und zur Regelung von technischen Parametern wie beispielsweise Energiezufuhr, Be- und Entlüftung und dergleichen mehr. Die energetische Basis für den Betrieb der Strahler ist entweder Elektroenergie, warme Rauchgase aus der Verbrennung von Gas bzw. Öl oder Thermoöl oder andere geeignete Energieträger.

Für Strahler eingesetzte Legierungen sind aus EP 0 994 827 A1 und WO 99/01401 bekannt. Die genannten Dokumente beziehen sich auf ein Infrarotstrahlung emittierendes keramisches Material. Dieses wird verwendet, um Gegenstände und Substanzen zu trocknen, zu backen, zu garen, zu rösten, zu frittieren oder zu sterilisieren. Die aus dem Stande der Technik bekannten Lösungen für die thermische Bearbeitung z.B. von landwirtschaftlichen Produkten oder Lebensmitteln weisen wenigstens einen der folgenden Nachteile auf. Es treten zu hohe Temperaturen der Emitter auf und damit einher geht eine zu hohe thermische Belastung empfindlicher Biogüter in Verbindung mit einer drastischen Qualitätsreduzierung. Aufgrund dessen treten zu große räumliche Entfernungen zwischen Emitter und Gut auf, die zu unwirtschaftlichen Bauhöhen führen. Ferner besteht eine zu geringe Effizienz der erzeugten Infrarotstrahlung, was insbesondere für den niedrigen Temperaturbereich zutrifft. Es lässt sich eine zu geringe sterilisierende Wirkung in Bezug auf Pilze und Bakterien sowie eine zu geringe Sicherheit und Zuverlässigkeit der verwendeten Materialien (z.B. Bruchgefahr glasartiger Quarzgutröhren) im Vergleich zu Anforderungen des modernen Verbraucherschutzes oder z.B. der Food and Drugs Association in den USA erreichen. Aus EP 0 994 827 A1 ist ein Infrarotstrahlung emittierendes keramisches Material bekannt, das Cr₂O₃, Fe₂O₃, SiO₂, MgO, Al₂O₃, CaO und CuO enthält. Ferner enthält dieses keramische Material CaCo₃, wobei die Bestandteile in Gewichtsprozenten in den folgenden Verhältnissen vorliegen: Cr₂O₃ zwischen 28,0 und 32,0 Gew.-%, CaCO₃ zwischen 7,0 und 10,0 Gew.-%, Fe₂O₃ zwischen 33,0 und 35,0 Gew.-%, SiO₂ zwischen 16,0 und 17,5 Gew.-%, MgO zwischen 4,0 und 6,0 Gew.-%, CaO zwischen 2,5 und 3,0 Gew.-%, Al₂O₃ zwischen 1,5 und 2,0 Gew.-%, Kupferoxid ist innerhalb eines Bereiches von 0,5 bis 1,0 Gew.-% enthalten.

DE 102 17 011.8-33 (Anmeldetag: 16.04.2002) offenbart einen Emitter zur Infrarotbestrahlung von biologischem Material. Dieser emittiert bei seiner Erwärmung Infrarotstrahlung, umfassend einen den von dem Infrarot-Emitter emittierten Spektralbereich der Infratorstrahlung beeinflussenden Funktionalkörper aus einem Keramikmaterial und einem Träger aus einem Trägermaterial. Das Keramikmaterial enthält dabei mindestens eine Komponente aus der folgenden Gruppe: Al₂O₃, B₂O₃, CaO, CaCO₃, CaZrO₃, CeO₂, Cr₂O₃, CuO, FeO, Fe₂O₃, Fe₃O₄, Gd₂O₃, LaAl₂O₄, MgAl₂O₄, MgCa₂O₄, MgO, SiO₂, YCr₂O₃ und ZrO₂. Aus DE 102 17 011.8 geht ferner ein Verfahren zur Infrarotbestrahlung von biologischem Material mit folgenden Verfahrensschritten hervor. Es wird elektromagnetische Strahlung in einem primären Emitter durch Zufuhr elektrischer Energie, chemischer Energie oder Wärmeenergie erzeugt. Ein Emitter wird durch Bestrahlung mit der elektromagnetischen Bestrahlung des primären Emitters erwärmt. Biologisches Material wird mit Infrarotstrahlung bei einer Temperatur des biologischen Materials zwischen 25°C und 120°C bestrahlt, welche der erwärmte Infrarot-Emitter emittiert.

WO 2003/088309 A3 offenbart einen Emitter zur Infrarotbestrahlung von biologischem Material. Gemäß dieser Lösung emittiert der Emitter bei seiner Erwärmung Infrarotstrahlung, umfassend einen den von dem Infrarot-Emitter emittierten Spektralbereich der Infrarotstrahlung beeinflussenden Funktionalkörper aus einem Keramikmaterial und einem Träger aus einem Trägermaterial, wobei das Keramikmaterial mindestens eine Komponente aus der folgenden Gruppe enthält: Al₂O₃, B₂O₃, CaO, CaCO₃, CaZrO₃, CeO₂, Cr₂O₃, CuO, FeO, Fe₂O₃, Fe₃O₄, Gd₂O₃, LaAl₂O₄, MgAl₂O₄, MgCa₂O₄, MgO, SiO₂, YCr₂O₃ und ZrO₂.

US 5,058,196 bezieht sich auf einen Infrarotheizer, der ein poröses metallisches Element umfasst, welches mit einer porösen Keramik beschichtet ist, die infrarote Strahlung emittiert. Der Heizer befindet sich auf einem kastenähnlichen Gehäuse, in dem ein elektrisches Heizelement angeordnet ist. An der äußeren Oberfläche befindet sich eine poröse, Infrarotstrahlung emittierende Schicht aus AL₂O₃, TiO₂, Cr₂O₃, MgO, ZrO₂, SiO₂ oder einem Gemisch aus diesen. Ein Gasstrom, der dem Inneren des Gehäuses zugeführt wird, wird durch das Element beheizt und passiert das porös ausgebildete Element sowie die Infrarotstrahlung emittierende Schicht und trifft auf das zu beheizende Objekt.

An Strahlermodule, zur thermischen Behandlung von Gütern, werden eine Reihe von Anforderungen gestellt. Die Strahlermodule sollen zum Einsatz in Maschinen und Geräten sowie Anlagen der Lebensmitteltechnik geeignet sein. Dazu müssen die Strahlermodule zum Garen, Backen, Rösten, Trocknen und anderen Behandlungsverfahren für gängige Lebensmittel verwendbar sein. Es soll eine möglichst schnelle und energiesparende Bearbeitung der Güter insbesondere bei niedrigen Temperaturen erreicht werden. Ferner ist eine schonende und die Wertstoffe erhaltende Bearbeitung von Lebensmittelgütern zu gewährleisten sowie die entkeimende Wirkung aufrechtzuerhalten.

Die zum Einsatz in Maschinen, Geräten und Anlagen der Lebensmitteltechnik geeigneten Strahlermodule müssen hohe Anforderungen hinsichtlich ihrer Bruchsicherheit erfüllen und im Idealfall bruchsicher ausgeführt sein. Die Strahlermodule müssen ferner waschbar sein, um den in der Lebensmittelindustrie herrschenden hygienischen Anforderungen gerecht zu werden. Ferner ist anzustreben, dass an den Reflektoren der Strahlermodule keine Verschleiß- und Verschmutzungserscheinungen auftreten.

Durch eine Messung der Guttemperatur unmittelbar in der Nähe der Energiequelle mit einem Infrarotsensor, durch einen Vergleich der ermittelten Temperatur mit dem Temperatursollwert für das thermisch zu behandelnde Gut und einer damit verbundenen Regelung der Energiezufuhr, der Transportgeschwindigkeit des Gutes sowie durch die Aufrechterhaltung einer optimalen Be- und Entlüftung sowie gegebenenfalls einer fortwährenden Durchmischung des Gutes sowie der Beibehaltung einer konstanten Belüftungsfeuchte, lässt sich eine hohe Qualitätssicherung hinsichtlich der thermischen Behandlung von leicht verderblichen Gütern wie beispielsweise Lebensmitteln erreichen.

Der vorliegenden Erfindung liegt die Aufgabe zugrunde, den Zeitaufwand sowie den Energieaufwand bei der thermischen Behandlung, wie beispielsweise Trocknen, Backen, Garen, Rösten und Frittieren zu verkürzen, ohne Qualitätseinbußen am erhaltenen Produkt in Kauf nehmen zu müssen.

Die Aufgabe wird durch die Merkmale gemäß der Ansprüche 1 und 10 gelöst.

Das erfindungsgemäß vorgeschlagene Verfahren, eine thermische Behandlung von zu backenden, zu garenden, zu röstenden oder zu frittierenden Lebensmitteln durch selektive transformierte Infrarotstrahlung, erlaubt eine erhebliche Verbesserung der Behandlungsqualität ähnlich in Steinöfen, aber in Verbindung mit der Applikation moderner industrieller Prinzipien. Werden in Backöfen, die gemäß des erfindungsgemäß vorgeschlagenen Verfahrens betrieben werden, mit Keramiken beschichtete Emitter eingesetzt, so weisen deren Emitter Temperaturen im Bereich zwischen 320°C und 600°C auf. Diese Temperatur liegt erheblich unter der Temperatur, die in Infrarotöfen mit herkömmlichen Emittern verwendet werden können und die etwa im Bereich zwischen 800°C und 1200°C liegen.

Das thermische Behandeln von Lebensmitteln mit selektiver transformierter Infrarotstrahlung erlaubt einen wesentlich höheren Anteil an erzeugter Infrarotwärme, der etwa zwischen 85 % und 90 % liegt. Demzufolge liegt der Anteil der erzeugten Konvektionswärme nur zwischen 10 und 15 %. Das erfindungsgemäß vorgeschlagene Verfahren setzt selektive transformierte Infrarotstrahlung bevorzugt in einem Spektralbereich zwischen 3,3 und 3,6 µm ein, welcher ausgesprochen gut mit dem Absorptionsvermögen eines Teiges (Kohlenwasserstoffmoleküle also C-H-Gruppenenthaltend) übereinstimmt. Der Anteil der Emissionen im Bereich zwischen 2,7 und 3,1 µm ist relativ gering. Im Spektralbereich zwischen 3,3 µm und 3,6 µm werden mit einer Keramik B2: Cr₂O₃ 25 % bis 35 %, Fe₂O₃ 35 % bis 50 %, SiO₂ 14 % bis 25 %, MgO 0 % bis 5 %, Al₂O₃ 0 % bis 8 %, beim schnellen und dennoch schonenden Backen und Garen von Lebensmittelgütern die C-H-Gruppen der Stärke, der Proteine, der Farbstoffe und der Aromastoffe angesprochen und weniger die O-H-Gruppen des Wassers; daher trocknet das Lebensmittelgut nicht aus. Das Absorptionsspektrum der C-H-Gruppen liegt bei diesem Spektralbereich von λ, = 3,3 µm bis 3,6 µm, so dass bei Resonanz günstig Energie übertragen werden kann. Das Absorptionsspektrum der O-H-Gruppen, welches zwischen λ = 2,7 µm und 3,1 µm liegt, wird bei diesem Spektralbereich weniger angesprochen.

Als weiterer Vorteil des erfindungsgemäß vorgeschlagenen Verfahrens ist zu nennen, dass das selektiv transformierte Infrarot zum Teil noch verstärkt durch Reflektoren auf die Oberfläche des Guts gerichtet werden kann. Generell erreicht die Oberfläche des Backgutes, des Gargutes, des Röstgutes oder des zu frittierenden Gutes ein wesentlich größerer und demzufolge besser verwertbarer Wärmestrom in W/cm², verglichen mit bisher eingesetzten Konvektionsöfen. Im Unterschied zur Konvektionswärme dringt die Infrarotwärme je nach Zustand des Teiges bis zu 2 bis 10 mm tief in das thermisch zu behandelnde Gut ein und wandelt sich erst dort in Wärme um. Die Strahlungsstromdichte in der Gutsoberfläche ist im Vergleich zu Öfen mit Konvektionswärme bis zu 20 Mal größer.

Mit dem zum Backen, Garen, Rösten und Frittieren eingesetzten selektiven transformierten Infrarotstrahlung in einem Wellenlängenbereich λ = 3,3 bis 3,6 µm werden vorzugsweise die Moleküle der organischen Bestandteile in Teig, Fleisch, Fisch usw. durch deren Absorptionsvermögen angesprochen. Das führt neben der geringeren Bearbeitungszeit zu einer geringeren Verdampfung und Austrocknung der Güter. Das im thermisch zu behandelnden Gut enthaltende Wasser dient als Wärmeleiter bei der Energieübertragung in die inneren Bereiche. Wird hingegen ein Spektralbereich von λ = 2,7 µm bis λ = 3,1 µm beispielsweise mit einer Keramik T1: Cr₂O₃ 12 % bis 33 %, SiO₂ 42 % bis 58 %, Al₂O₃ 22 % bis 38 % eingestellt, welche für ein schnelles und dennoch schonendes Trocknen von Lebensmittelgütern dient, so werden innerhalb dieses Spektralbereiches die O-H-Gruppen im zu verdampfenden Wasser angeregt und weniger die zu erhaltenden C-H-Gruppen (Vitamine, Farbstoffe, Aromastoffe, Proteine). Das Absorptionsspektrum der O-H-Gruppen liegt bei diesem Spektralbereich von λ = 2,7 µm bis λ = 3,1 µm. Damit wird bei Resonanz günstig Energie übertragen, wobei das Absorptionsspektrum dieser selektiv transformierten Infrarotstrahlung von C-H-Gruppen, welches bei λ = 3,1 µm bis λ = 3,5 µm liegt, weniger angesprochen wird.

Durch die selektive, transformierte Infrarotstrahlung in den genannten Spektralbereichen kann einerseits ein schnelles und dennoch schonendes Trocknen von Lebensmittelgütern erreicht werden und andererseits ein schnelles und dennoch schonendes Backen und Garen von Lebensmittelgütern erreicht werden.

Es lassen sich drei entscheidende Vorteile gegenüber dem bisher bekannten Backen, Garen, Rösten und Frittieren von Lebensmitteln erreichen. Der Energiebedarf ist verglichen mit dem Einsatz von Konvektionswärme zwischen 50 und 65 % geringer. Ferner lässt sich eine erhebliche Verkürzung der Back-Gar-Röst- bzw. der Frittierzeit erreichen, die abhängig vom thermisch zu behandelnden Gut im Vergleich zur thermischen Behandlung des Gutes mit Konvektionswärme auf nur noch 50 bzw. 35 % reduziert werden kann. Damit einher geht eine zumindest erreichbare Verdopplung der Kapazität je m² Ofenfläche einher. Aufgrund dieser erheblichen Erhöhung der Flächenproduktivität lassen sich Raumengpässe in Bäckereibetrieben lösen.

Schließlich ist die Qualität des erhaltenen Back-, Gar-, Röst- bzw. Frittiergutes erheblich verbessert, da sich z.B. beim Backen eine größere Feuchte der Krume mit Auswirkung auf Geschmack und längere Frische erreichen lässt. Ferner tritt keine Überhitzung der Oberfläche auf, womit eine geringere Gefahr bzw. keine Gefahr der Acrylamidbildung einhergeht. Ferner stellt sich eine erhebliche Verminderung der Zerstörung von Wertbestandteilen wie z.B. Vitamin B im thermisch zu behandelnden Gut ein. Verglichen mit bisher gängigen Verfahren unter Einsatz der Konvektionswärme, lässt sich eine zumindest gleichgute Krustenbildung erzielen; ferner werden Hefen und andere Mikroorganismen wirkungsvoller sterilisiert.

Die mit dem erfindungsgemäß vorgeschlagenen Verfahren behandelten Lebensmittel sind sehr viel schmackhafter, weil während ihrer thermischen Behandlung gemäß des vorstehenden Verfahrens ein großer Anteil der Enzyme, Proteine, Natursäfte, Vitamine und Mineralstoffe nicht beeinträchtigt werden, wodurch sich insgesamt gesehen, derart thermisch behandelte Produkte durch einen größeren Nährwert auszeichnen. Ferner lässt sich die Frischhaltezeit solcherart thermisch behandelter Lebensmittel wesentlich erhöht. Hinsichtlich der thermischen Behandlung zu frittierender Lebensmittel ist als vorteilhaft herauszustellen, dass sich ein geringerer Fettgehalt aufgrund der Behandlung von Frittiergut mit dem erfindungsgemäß vorgeschlagenen Verfahren erreichen lässt. Die Energie, die zum Frittieren von Lebensmitteln erforderlich ist, wird nicht über ein heißes Ölbad in das thermisch zu behandelnde Gut eingebracht, sondern direkt unter Bestrahlung dieses Gutes mit selektiv transformierter Infrarotstrahlung mit Hilfe eines dünnen Ölfilms. Ferner werden Ölbäder beim Auswechseln nicht zu einem ökologischen Problem hinsichtlich ihrer Entsorgung. Beim Garen von Lebensmitteln wird in der Regel kein Fett benötigt, der Garprozess erfolgt überwiegend im eigenen Saft.

Die selektive transformierte Infrarotstrahlung wird in der Regel durch Emitter erzeugt, die Trägermaterialien aus Stahl bzw. hochfesten Keramiken aufweisen. Damit wird die Bruchgefahr der Emitter zumindest wesentlich reduziert und im Idealfalle ausgeschlossen. Die auf die Trägermaterialien der Emitter aufgebrachte Funktionskeramik wird durch Beschichtungsverfahren wie Plasmabeschichtung bzw. Vakuumverdampfung aufgebracht, die eine zuverlässige Verbindung mit dem Trägermaterial des Emitters gestatten. Es lassen sich Stabstrahler mit Reflektoren als Emitter einsetzen, die geometrisch optimal geformt sind, die einen sehr hohen Reflektionswert aufweisen und lebensmitteltauglich hinsichtlich der Waschbarkeit und Beständigkeit gegen Laugen und Säuren sind. Als Emitter mit Trägermaterialien und einer auf diese aufgebrachten Funktionskeramik können auch Flachstrahler eingesetzt werden.

Die Emitter sind nahezu bruchsicher. Ferner ist eine Waschbarkeit der das thermisch zu behandelnde Gut bestrahlenden Emitter gegeben, schließlich sind die eingesetzten Trägermaterialien bzw. Funktionskeramiken unbedenklich hinsichtlich der hygienischen Anforderungen. Ferner kann aufgrund der eingesetzten Materialien und Beschichtungsverfahren beim erfindungsgemäß vorgeschlagenen Behandeln von thermisch zu behandelndem Gut beim Backen, Rösten, Garen und Frittieren zusätzlich Dampf eingebracht werden, was z.B. bei der Beschwadung von Brotwaren oder Bedampfung von Hefeklößen, Knödeln u.ä. erfolgt, ohne dass die die selektive transformierte Infrarotstrahlung emittierenden Emitter zerstört werden oder Partikel verlieren.

### Zeichnung

Anhand der Zeichnung wird die Erfindung nachstehend eingehender beschrieben.

Es zeigt:
- Figuren 1.1 - 1.3: verschiedene STIR-Emitter mit unterschiedlichem Aufbau,
- Figur 2: die Übertragung selektiv transformierter Infrarotstrahlung (STIR) auf das Lebensmittelgut,
- Figur 3: STIR-System bestehend aus STIR-Modul sowie Meß-, Steuer- und Regeltechnik,
- Figur 4: Einzelkammersysteme zum Backen oder Garen von Lebensmittelgut,
- Figur 5, 6: Ausführungsvarianten eines STIR-Systems für rotierendes Lebensmittelgut,
- Figur 7: Mehrkammersysteme z.B. Herde innerhalb eines Backofens,
- Figur 8: die thermische Bearbeitung von Lebensmittelgütern, die kontinuierlich durch einen Arbeitsraum transportiert werden,
- Figur 9: die Vorbackzeit von Brötchen-Teiglingen bis zum Erreichen einer erforderlichen Kerntemperatur von 97°C"
- Figur 10: die Fertigbackzeit vorgebackener Brötchenteiglingen bis zum Erreichen einer Kerntemperatur von 97°C,
- Figur 11: ein Vergleich der Backzeit von Brötchen, die nach dem Konvektionswärmeprinzip gebacken und nach dem erfindungsgemäß vorgeschlagenen Verfahren der selektiven transformierten Infrarotstrahlung gebacken werden und
- Figur 12: der Backzeitverlauf eines Brotlaibes, welcher mit dem erfindungsgemäßen Verfahren gebacken wird, bis eine Kerntemperatur von 97°C erreicht ist.

### Ausführungsvarianten

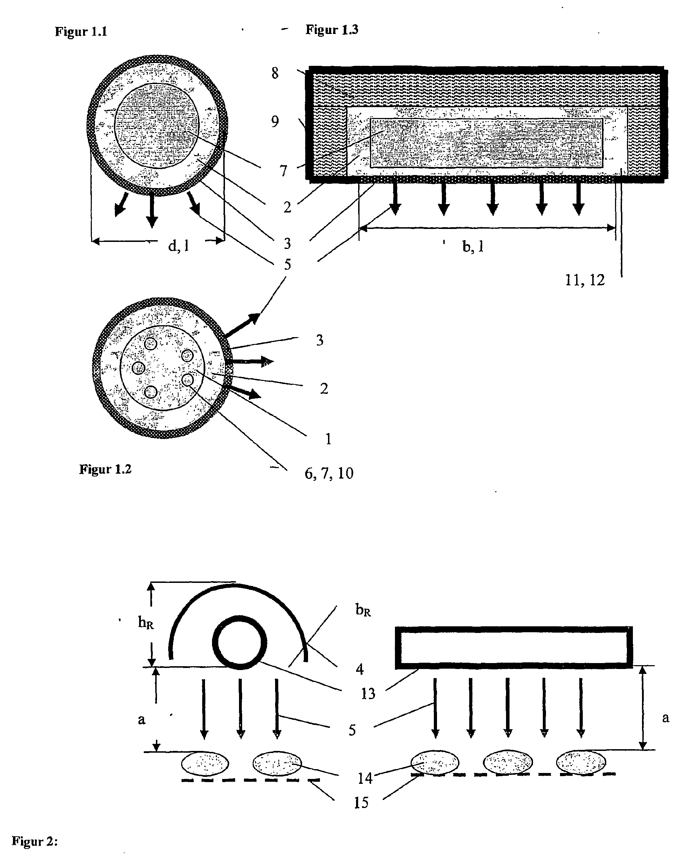

Den Figuren 1.1 bis 1.3 sind verschiedene Ausgestaltungsvarianten von STIR-Emittern zu entnehmen.

Die Figuren 1.1 und 1.2 zeigen Stabemitter bzw. Rohremitter mit nachfolgend beschriebenem Aufbau. Ein rohrförmig konfigurierter Keramikträger 2 ist auf seiner Außenfläche mit einer Funktionskeramik, die als Schicht (3) aufgebracht ist, versehen. Im Innenraum des Keramikträgers 2 befindet sich ein Kern 1. Bei dem Trägermaterial des Keramikträgers 2 kann es sich um Stahl unterschiedlicher Legierung, um Aluminium, Kupfer, Messing, Spezialkeramiken oder Quarzgut sowie Quarzglas handeln. Im Kern 1, vergleiche Stabemitter gemäß Figur 1.2, befinden sich zueinander parallel verlaufende Öffnungen, die sich in Längsrichtung des Kerns 1 erstrecken. In die Öffnungen (Kapillare 6) können beispielsweise Einrichtungen, die als langgestreckte Widerstandsdrähte 10 ausgebildet werden können, eingesetzt werden. Der Stab- bzw. der Rohremitter gemäß der Darstellung in Figur 1.1 bzw. 1.2 kann von einem in diesen Figuren nicht dargestellten Reflektor teilweise umschlossen sein. Die Formgebung dieses Reflektors, die Reflektorhöhe und die Größe der Reflektoröffnung sind abhängig vom Durchmesser des Stab- bzw. Rohremitters, Bezugszeichen d, so gewählt, dass die Strahlungsenergie optimal nutzbar ist unter Beachtung der beabsichtigten Strahlungsausrichtung.

Als Funktionskeramikbeschichtung 3 kommen bevorzugt Funktionskeramiken B1 mit einem hohen Anteil der abgestrahlten Wellenlänge im Spektralbereich λ von 2,4 µm bis 2,7 µm in Betracht. Ferner kommen Funktionskeramiken B2 mit einem hohen Anteil der Wellenlänge λ von 3,3 µm bis 3,6 µm zum Einsatz. Schließlich ist es auch möglich, auf die Außenumfangsfläche des Keramikträgers 2 Funktionskeramiken B3 mit einem hohen Anteil der Wellenlänge λ von 4,0 µm bis 5,0 µm aufzubringen. Eine weitere Beschichtungsmöglichkeit des Keramikträgers 2 ist durch das Aufbringen einer Funktionskeramik T1 mit einem hohen Anteil der Wellenlänge λ von 2,7 µm bis 3,1 µm zu erblicken. Die sich auf der Oberfläche der Funktionskeramikschicht 3 einstellenden Temperatur liegen zwischen 80° C und 800°C.

Die Funktionskeramikschicht 3 wird auf die Umfangsfläche des Keramikträgers 2 beispielsweise durch eine vollständige Beschichtung des Keramikträgers 2 aufgebracht. Daneben sind partielle Beschichtungen der Außenumfangsfläche des Keramikträgers 2 streifen- oder segmentweise möglich. Eine Beschichtung des Keramikträgers 2 kann unterbleiben, wenn dieser aus Spezialkeramik befestigt ist und die Funktionskeramikschicht 3 an seiner Außenumfangsfläche darstellt.

In den Figuren 1.1 bzw. 1.2 ist die von der Außenumfangsfläche der Funktionskeramikschicht 3 abgestrahlte selektive transformierte Infrarotstrahlung durch Bezugszeichen 5 gekennzeichnet. Als Energiesystem 7 für den Stabemitter gemäß Figur 1.1 dient z.B. ein in den Kern 1 eingebrachter und gestreckter elektrischer Widerstandsdraht 10. Als Energiesystem 7 für Rohremitter gemäß Figur 1.2 dienen entweder ein wendelförmiger elektricher Widerstandsdraht oder ein warmer Rauchgas, welches aus der Verbrennung von Gas oder Öl herrührt, mit einer Temperatur bis zu 800°C möglich. Ferner kann als Energiesystem 7 erwärmtes Thermoöl mit einer Temperatur bis zu 350°C eingebracht werden sowie Wasser, welches unter Druck steht und eine Temperatur bis zu 350°C aufweist. Bei der Erwärmung der elektrischen Widerstandsdrähte 10 innerhalb der Öffnungen 6 treten Temperaturen des Energieträgers von bis zu 800°C auf.

Der Durchmesser d des Stab- bzw. Rohremitters gemäß den Darstellungen in Figuren 1.1 bzw. 1.2 liegt bei Stabemittern in der Größenordnung zwischen 6 mm und 20 mm, bei Rohremittern in der Größenordnung zwischen 20 mm und 400 mm. Die Länge der in den Figuren 1.1 bzw. 1.2 dargestellten Emitterbauformen liegt hinsichtlich der Stabemitter gemäß Figur 1.1 zwischen 250 mm und 1600 mm und hinsichtlich der in Figur 1.2 dargestellten Rohremitter zwischen 1000 mm und 10000 mm.

Figur 1.3 ist ein Flachemitter zu entnehmen, der innerhalb seines Gehäuses von einer thermischen Isolation umschlossen ist.

Das Energiesystem 7 des Flachemitters gemäß der Darstellung in Figur 1.3 ist von einem Keramikträger 2 umschlossen, der seinerseits von einer thermischen Isolierung 8 innerhalb seines Gehäuses 9 umgeben ist. Der Bereich, in welchem der in Figur 1.3 dargestellte Flachemitter selektiv transformierte Infrarotstrahlung 5 emittiert, ist durch seine Breite b_{F} gegeben. Sie liegt im Bereich von 40 mm und 1.600 mm. Die Emitterlänge liegt zwischen 250 mm und 4.000 mm. Der in Figur 1.3 dargestellte Flachemitter gibt in dieser Ausführungsvariante selektiv transformierte Infrarotstrahlung 5 lediglich an seiner Unterseite ab. Mit Bezugszeichen 11 und 12 sind jeweils eine Keramiktafel sowie ein Plattenthermobehälter bezeichnet.

Die Keramiktafel 11 kann bei Einsatz eines elektrisch ausgebildeten Energiesystemes 7 gleichzeitig als Träger der Funktionskeramik 3 dienen, während der erwähnte Plattenthermobehälter 12 bei Einsatz der Energiesysteme Gas, Öl sowie unter Druck stehendem Wasser gleichzeitig den Träger der Funktionskeramikschicht 3 darstellt.

Figur 2 ist die Übertragung selektiv transformierter Infrarotstrahlung (STIR) auf Lebensmittelgut zu entnehmen.
Wie aus Figur 2 hervorgeht, ist der dort schematisch dargestellte Rohremitter bzw. Stabemitter von einem Reflektor 4 umgeben. Rohremitter bzw. Stabemitter 13 werden zusammen mit dem Einsatz eines Reflektors 4 als Rohr- bzw. Stabstrahler bezeichnet. Der Reflektor 4 gemäß der Darstellung in Figur 2 ist exakt oder annähernd parabolisch ausgebildet und weist eine Strahlenführung auf, die je nach Bedarf fokussierend, parallel oder streuend verläuft. Reflektormaterialien sind bevorzugt mit Gold beschichtetes Edelstahl bzw. Aluminium.

Die Reflektorhöhe h_{R} beträgt bei Stabemittern 13 bevorzugt zwischen 40 mm und 100 mm, während sie bei Rohremittern 13 zwischen 100 mm und 800 mm liegt. Die Öffnungsbreite bᵣ der Reflektoren 4 liegt beim Einsatz von Stabemittern 13 zwischen 40 mm und 200 mm, wohingegen sie bei Rohremittern 13 zwischen 100 mm und 1000 mm liegen kann. Der in Figur 2 eingetragene Abstand a zwischen der Unterseite des Stabes bzw. Rohremitters 13 und der Oberfläche des thermisch zu behandelnden Lebensmittelgutes 14 liegt bei ruhendem Gut bevorzugt zwischen 100 mm und 300 mm und bei bewegtem Gut zwischen 10 mm und 200 mm. Bei der Auflage 15, auf dem das thermisch zu behandelnde Lebensmittelgut 14 aufgenommen ist, kann es sich z.B. um Auflagen wie Roste, Herdplatte, Backbleche, Stahlnetzbänder o.ä. handeln sowie um umlaufende Transportbänder, auf denen das thermisch zu behandelnde Lebensmittelgut 14 kontinuierlich transportiert wird. Die Emitter, seien es Stab- oder Rohremitter 13 gemäß der Darstellung in den Figuren 1.1 und 1.2, können sowohl im Verbund mit Reflektoren 4 als Strahler ausgebildet werden, während es in gleicher Weise möglich ist, ein oder mehrere solcher Art beschaffener Strahler in geschlossenen Einheiten aufzunehmen, die als Module bezeichnet werden.

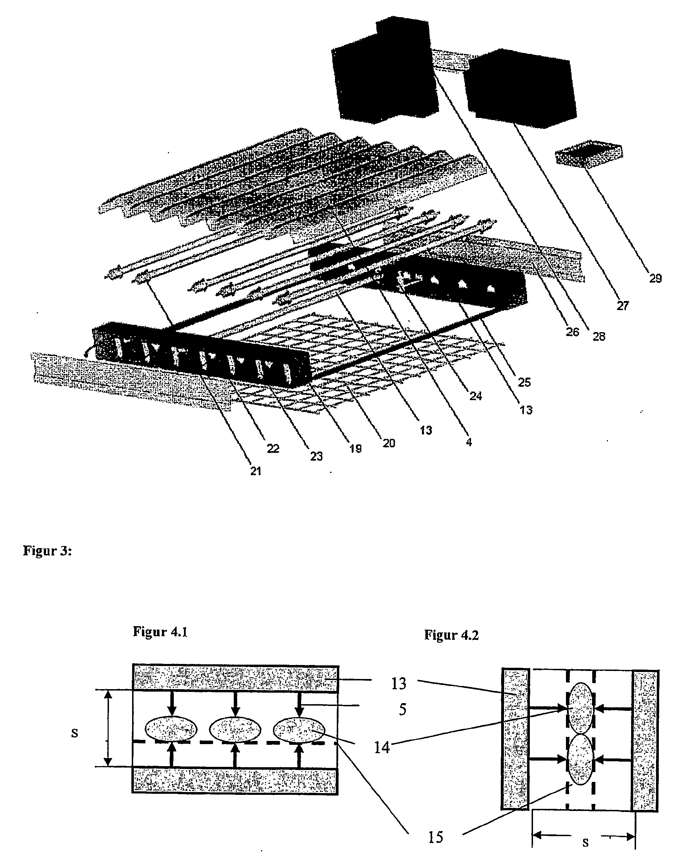

Figur 3 ist ein STIR-System zu entnehmen, dessen STIR-Modul sowie dessen Meß-Steuer- und Regeltechnik schematisch dargestellt sind.

Die Emitter 13 bestehen nach Figur 1.1 bis Figur 1.3 demzufolge aus den Trägern 2. Diese Träger 2 haben zwei Funktionen: "tragen" der Funktionskeramik 3 nach außen und "aufnehmen" des Energiesystems 7 nach innen. Bei Stabemittern ist das Energiesystem in einem Kern mit gestreckten NiCr-Widerstandsdrähten 10 in den Kapillaren 6 untergebracht. Oberhalb der Stab- bzw. Rohremitter befinden sich Reflektoren 4. Die Einheit aus Rohr- bzw. Stabemitter 13 mit Reflektoren ergibt einen Rohr- bzw. Stabstrahler - siehe Figur 2. Die Einheit von Flachemitter 13 mit Isolierung 8 und Gehäuse 9 ergibt einen Flachstrahler.

Gemäß Figur 3 sind die Stabemitter 13 mit je zwei Endstücken 21 gegenüber dem aufnehmenden Rahmen 19.1 isoliert. Unterhalb der nebeneinander angeordneten Emitter wird bei Bedarf ein Schutzgitter 20 angebracht. Die Bezugszeichen 24 in Figur 3 ist ein Infrarotsensor / Thermoelement bezeichnet, welches im Rahmen 19.1 angeordnet ist. Die Emitter 13 sind durch Verbindungsstreben 25 zueinander fixiert. Die Kontakte der Emitter 13 werden mit Kontaktabdeckungen 23 versehen werden. Zur Steuerung des STIR-Systems gemäß der Darstellung in Figur 3 sind eine Speicher programmierbare Steuerung 27, ein Thyristor 28 sowie ein Wandler 29 für den Infrarotsensor bzw. das Thermoelement 24 vorgesehen.

Figur 4 sind Einzelkammersysteme zum Backen oder Garen von Lebensmittelgut in schematischer Darstellung zu entnehmen.

Figur 4.1 ist eine horizontale Anordnung entnehmbar, wobei beidseits einer das thermisch zu behandelnde Lebensmittelgut 14 aufnehmenden Auflage 15 jeweils Emitter 13 gemäß der Darstellung in Figur 1.3 angeordnet sein können. Die Emitter 13 sind in einem Abstand s zueinander aufgenommen, der zwischen 100 mm und 400 mm liegen kann. Das thermisch zu behandelnde Gut 14 wird in der horizontalen Anordnung gemäß der Darstellung in Figur 4.1 von oben und unten mit selektiv transformierter Infrarotstrahlung bestrahlt. Bei der Auflage 15 kann es sich um ein Rost-, eine Herdplatte, ein Backblech, ein Stahlnetzband oder ein kontinuierlich umlaufendes Förderband handeln.

Die in Figur 4.2 dargestellte vertikale Anordnung zeigt zwischen zwei Auflagen 15 aufgenommenes thermisch zu behandelnde Lebensmittelgut 14, wobei die beiden Emitter 13, durch welche selektiv transformierte Infrarotstrahlung 5 auf das Lebensmittelgut 14 abgestrahlt wird, vertikal einander gegenüberliegen. Der Abstand der beiden Emitter 13 ist durch s bezeichnet.

Neben den in Figuren 4.1 bzw. 4.2 dargestellten horizontalen bzw. vertikalen Anordnung können die beiden Emitter 13 auch schräg zueinander angeordnet sein. Dass die Emitter 13 jeweils umgebende Gehäuse kann offen, halb offen oder geschlossen sein wobei die Emitter 13 als Module ausgebildet sein können. Es lässt sich nur ein Emitter 13 (auch in Modulbauweise) an einer Seite des thermisch zu behandelnden Lebensmittelgutes 14 anordnen, wobei auch - wie in den Figuren 4.1 und 4.2 dargestellt - jeweils zwei Emitter 13 einander gegenüberliegend angeordnet sein können. Ferner ist es auch möglich, mehrere Emitter bzw. Emittermodule vorzusehen, die sich sowohl waagerecht als auch senkrecht hinsichtlich des thermisch zu behandelnden Gutes 14 orientiert sind.
Die in Figur 4.1 bzw. 4.2 dargestellte Anordnung eines STIR-Systems lässt sich zum Trocknen, Backen, Garen, Rösten und Frittieren von Lebensmittelgut einsetzen. Ferner ist diese Anordnung dazu geeignet, gebackene, gegarte, geröstete oder frittierte Lebensmittelprodukte warm zu halten. Beim Warmhalten kommt es im Unterschied zur Konvektionswärmebehandlung nicht zur schnellen Entwicklung von Mikroorganismen, beim Bestrahlen des warm zuhaltenden Lebensmittelgutes 14 wird das Wachstum von Mikroorganismen stark eingeschränkt. Damit lassen sich entsprechend behandelte Lebensmittelgüter 14 entsprechend der Hygienenormen länger warm zuhalten.

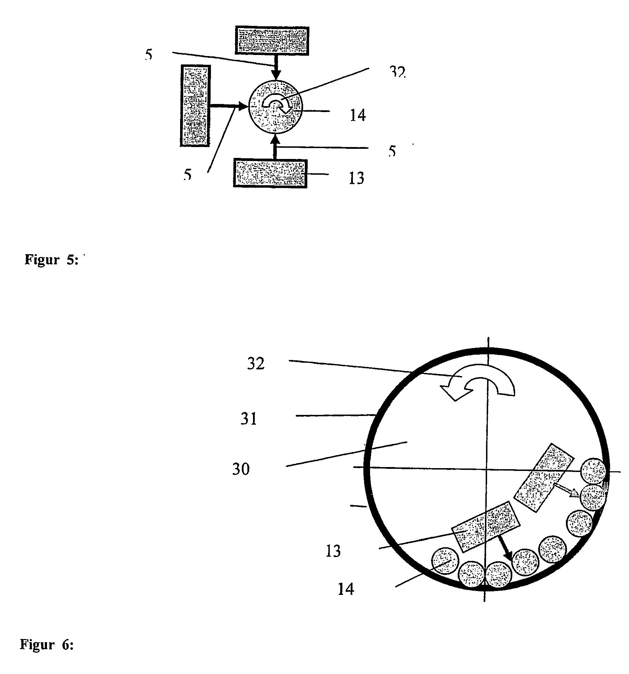

Den Figuren 5 und 6 ist die thermische Behandlung für Lebensmittelgut zu entnehmen, dem eine Rotationsbewegung in Bezug auf selektiv transformierte Infrarotstrahlung 5 emittierende Emitter 13 aufgeprägt wird.

In den Anordnungen gemäß der Figuren 5 und 6 lassen sich als Stückgut ausgebildete thermisch zu behandelnde Lebensmittelgüter 14 mit selektiv transformierter Infrarotstrahlung Trocknen, Backen, Garen, Rösten oder Frittieren. Ferner können in den Anordnungen gemäß der Figuren 5 und 6 derart thermisch behandelte Lebensmittelgüter 14 warm gehalten werden.

Es ist möglich, das thermisch zu behandelnde Lebensmittelgut 14 durch ein Emitter bzw. Emittermodul 13 lediglich von einer, als auch von zwei sowie wie in Figur 5 dargestellten 3 Seiten mit selektiv transformierter Infrarotstrahlung 5 zu behandeln. Die Emitter 13 können dabei beispielsweise als Flachemitter gemäß der Darstellung in Figur 1.3 ausgebildet sein. Das als Stückgut konfigurierte thermische zu behandelnde Lebensmittelgut 14 rotiert in einem Drehsinn 32. Die Achse, um welche das thermisch zu behandelnde Lebensmittelgut 14 rotiert, kann dabei senkrecht als auch waagerecht zur Zeichenebene gemäß der Darstellung in Figur 5 verlaufen.

Rotierendes Schüttgut lässt sich innerhalb einer Trommel 30 aufnehmen, deren Trommelwandung mit Bezugszeichen 31 gekennzeichnet ist. Die Trommel 30 rotiert in einem Drehsinn 32 um ihre Achse. Innerhalb der Trommel können beispielsweise stationär angeordnete Emitter 13 in Modulbauweise mit Stab-, Rohr- oder Flachemittern angeordnet sein. Dies kann beispielsweise zur thermischen Behandlung von Lebensmittelgütern wie Kaffee, Bohnen, Nüssen, Chips und andere Schüttgüter eingesetzt werden. Ferner eignet sich die in Figur 6 dargestellte Anordnung eines STIR-Systemes zum Frittieren von thermisch zu behandelndem Lebensmittelgut 14.

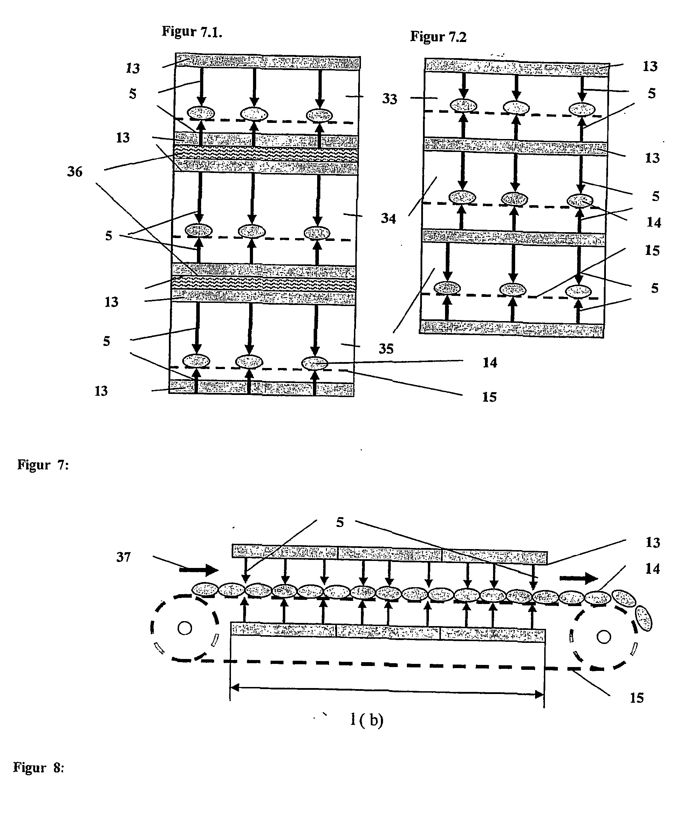

Den Figuren 7.1 bzw. 7.2 sind Mehrkammersysteme entnehmbar, wie z.B. Herde innerhalb eines in Etagenform ausgebildeten Backofens.

In der Darstellung gemäß Figur 7.1 sind getrennte Kammern 33, 34 und 35 voneinander durch Isolationsschichten 36 getrennt. Die drei Kammern 33, 34, 35, in denen jeweils Emitter 13 angeordnet sind, können autonom arbeiten. Pro Kammer 33, 34, 35 sind an Ober- bzw. Unterseite Emitter 13 erforderlich. Diese strahlen selektiv transformierte Infrarotstrahlung 5 auf das thermisch zu behandelnde Lebensmittelgut 14 ab, welches auf einer rostartigen Aufnahme 15 aufgenommen ist.

In der Darstellung gemäß Figur 7.2 sind die einzelnen Kammern 33, 34, 35 miteinander verbunden wobei die zwischen den Kammern 33 und 34 liegenden Emitter 13 bzw. der zwischen der Kammer 34 und der Kammer 35 angeordnete Emitter 13 sowohl nach oben wie nach unten selektiv transformierte Infrarotstrahlung 5 abstrahlt.

In den Figuren 7.1 bzw. 7.2 sind Emitteranordnungen gezeigt, mit welchen drei Kammern 33, 34, 35 ausgestattet werden können. Je nach zur Verfügung stehenden Bauraum lassen sich zwei bis zehn Kammern 33, 34, 35 übereinander liegend anordnen.

Figur 8 zeigt eine thermische Behandlung von Lebensmittelgut auf einer umlaufenden Auflage.

Beidseits der um Förderrollen umlaufenden endlosen Auflage 15 sind Emitter 13 angeordnet. In Durchlaufrichtung 37 gesehen, ist das thermisch zu behandelnde Lebensmittelgut 14 auf der Oberseite der Auflage 15 aufgenommen und wird von dieser kontinuierlich gefördert. Während der Förderung wird das thermisch zu behandelnde Lebensmittelgut 14 von der Oberseite und der Unterseite der mit in selektiv transformierter Infrarotstrahlung 5 bestrahlt. Die Länge der Band-Auflage l_{B} 15 gemäß der Konfiguration in Figur 8 kann zwischen 0,5 m und 50 m liegen, während die Breite der Band-Auflage b_{B} üblicherweise zwischen 0,4 m und 4 m liegt. Neben der in Figur 8 dargestellten Anordnung der Emitter 13 bzw. Emittermodule 13 beidseits der umlaufenden Auflage 15 lassen sich auch lediglich Emitter 13 bzw. Emittermodule an der Oberseite anordnen, so dass das thermisch zu behandelnde Lebensmittelgut 14 nur von der Oberseite her bestrahlt wird.

Nach der erfindungsgemäß vorgeschlagenen Lösung umfasst ein Stabstrahler einen Reflektor. Ein Keramikträger umfasst einen innenliegenden Kern, der Kapillaren für die Aufnahme mindestens einer Heizeinrichtung aufweist. Auf den Keramikträger ist eine Keramikschicht als Funktionskeramik aufgebracht. Der Stabstrahler wird durch den Reflektor komplettiert. Je nach Einsatz, Aufgabe und Verwendungszweck sind bestimmte Werte für Emitterdurchmesser, Reflektoröffnung, Reflektorhöhe, Emitterlänge, Emitterleistung im Verhältnis zur Emitterlänge, die Emitterleistung ins Verhältnis zur Fläche gesetzt, realisierbar. Als Richtwerte haben sich für den Emitterdurchmesser 6 bis 14 mm durchgesetzt, während die Reflektoröffnung in einer Größe zwischen 40 bis 100 mm liegt. Die Reflektorhöhe beträgt im allgemeinen zwischen 40 bis 100 mm wobei die Emitterlänge zwischen 250 mm und 1600 mm variieren kann. Die heute gängigen Emitterleistungen pro Emitterlänge betragen 0,1 bis 2 kW/m, die Emitterleistung bezogen auf die Emitterfläche liegt zwischen 1,25 und 100 kW/m².

Die Vorteile dieses Strahlertyps sind vor allem daran zu erblicken, dass die genannten Hauptparameter gezielt beeinflusst und eingestellt werden können. Es können relativ einfache und preiswerte Stabstrahler eingesetzt werden. Die Strahlungsenergie lässt sich gestreut, parallel gebündelt, fokussiert oder in Mischformen auf das thermisch zu behandelnde Gut aufbringen. Weiterhin sind Güter unterschiedlicher Höhe und Größe gut bearbeitbar.

Der Kern mit den Kapillaren besteht aus einem keramischen Werkstoff; üblicherweise wird Al₂O₃ eingesetzt. In den Kern sind eine Anzahl von n-Kapillaren eingebracht, wobei n einen Wert ≥ 1 annimmt. Der Widerstand ist in vorteilhafter Weise in Form eines gestreckten Nickelehromwiderstandsdrahtes beschaffen. Bei einer angelegten definierten Spannung wird eine dementsprechende Leistung erzeugt, die zur Erzielung einer beabsichtigten Temperatur erforderlich ist. Die beschriebene Anordnung des Widerstandsdrahtes im Kern garantiert eine minimale Temperaturabweichung von ≤ 5 % bezogen auf die Gesamtlänge des Emitters. Damit lässt sich eine gleichmäßige Strahlungsintensität, zum Beispiel über die gesamte Breite einer Band-Auflage 15 gemäß Figur 8, realisieren.

Weiterhin ermöglicht dieser Aufbau einen problemlosen Transport sowie einen Einsatz des oder der Emitters in senkrechter Position. In der Regel wird der mit dem Nickel-Chrom-Widerstand komplettierte Kern in einen rohrförmigen Keramikträger eingesetzt.

Der Keramikträger erfüllt im wesentlichen zwei Funktionen, nämlich die Aufnahme des Kerns mit dem elektrischen Heizwiderstand in seinem Inneren, die Emission eines definierten Basisspektrums an elektromagnetischen Wellen entsprechend der Charakteristik des eingesetzten Trägermaterials sowie die Aufnahme einer Keramikschicht als Funktionskeramik auf seiner Oberfläche.

Als Grundmaterialien für den Keramikträger haben sich verschiedene Trägermaterialien als geeignet erwiesen: Quarzgut, beispielsweise kristallines Siliziumoxid, dessen werkstoffspezifisches Emulsionsspektrum ausgenutzt werden kann. Der Kern unterstützt zusätzlich die Biege- und Bruchfestigkeit des Trägers. Als weiteres Grundmaterial sei Edelstahl genannt. Edelstahl weist eine absolute Bruchsicherheit auf, wobei der Kern gleichzeitig als elektrischer Isolator und als thermischer Speicher genutzt werden kann. Ferner Keramikmaterial, insbesondere Al₂O₃ mit 99,95 % Reinheit. Dieser Keramikwerkstoff gewährleistet eine extrem hohe Bruchsicherheit und ermöglicht gleichzeitig die Ausnutzung des werkstoffspezifischen Emissionsspektrums. Eine solcher Art beschaffene Funktionskeramik kann direkt auf den Kern aufgebracht werden, wobei auf einen zusätzlich vorzusehenden Rohrkörper verzichtet werden kann. Der Kern und der Keramikträger sind somit zu einem Bauteil vereint.

Die eingesetzte Funktionskeramik umfasst je nach Einsatzzweck für die jeweilige thermische Bearbeitung von Gütern eine Legierung mit 5 bis 10 Komponenten verschiedener hochreiner Oxide, wie sie aus EP 0 994 827 und EP 1017 647 bekannt sind. Die Funktionskeramik wird vorzugsweise als gesinterte Dünnschicht mit einer Dicke von 5 bis 30 µm auf die Oberfläche des Keramikträgers aufgebracht. Je nach eingesetzter Legierung und in Abhängigkeit von der gewählten Oberflächentemperatur in der Keramikschicht, wird ein definiertes Infrarotspektrum elektromagnetischer Wellen in einer höheren Konzentration im engen Bereich der beabsichtigten Wellenlänge erzeugt. Die Beschichtung des Keramikträgers mit der Funktionskeramik erfolgt beispielsweise durch atmosphärisches Plasmaspritzen (ABS). Mittels dieses Beschichtungsverfahrens lassen sich sehr dünne Schichten aufbringen, die die nachfolgend aufgezählten Eigenschaften aufweisen: Es lassen sich Schichtdicken zwischen 5 und 30 µm aufbringen, denen eine überdurchschnittlich hohe Temperaturwechselbeständigkeit innewohnt. Die derart erzeugten Keramikschichten weisen eine sehr gute Haftung auf Edelstahl sowie auf Quarzgut auf. Ferner sind derart erzeugte Schichten mit einer porenmechanischen Verschließfestigkeit ausgestattet und sie eignen sich sehr gut für das zum Einsatz innerhalb des selektiven transformierten Infrarot-Prozesses (STIR).

Ferner sind diese Schichten hinsichtlich der hygienischen Erfordernisse im Lebensmittelbereich sehr gut abwaschbar und weisen eine hohe Beständigkeit gegenüber sauren oder alkalischen Waschmitteln auf.
Der Emitter ist auf beiden Seiten mit jeweils einem Isolator zur thermischen und elektrischen Isolierung gegenüber seinen Aufnahmen im Metallrahmen versehen. Die elektrischen Kontakte sind durch den bzw. die Isolatoren nach Außen geführt. Die Kontaktierung erfolgt über Klemmverbindungen, Schraubverbindungen oder schnell lösbare und axial druckfreie Steckverbindungen. Alle Verbindungsstellen lassen sich durch Einsatz von Silikon, herkömmlichen Gummidichtungen oder auf eine andere geeignete fachübliche Weise gegen Wasser schützen.

Die Auswahl der Größe des Widerstandes sowie die Höhe der angelegten Spannung erlaubt eine definierte Wärmeübertragung vom Widerstandsdraht zur Funktionskeramik. Die Funktionskeramik erzeugt in Abhängigkeit von der anliegenden Temperatur, die vorzugsweise zwischen 100°C und 1000°C liegt und unter Berücksichtigung der jeweils eingesetzten Keramiklegierung eine Gesamtmenge an Strahlungsintensität pro Fläche, die sich innerhalb des erzeugten Spektralbereiches auf beabsichtigte Bereiche elektromagnetischer Wellen konzentriert. Die Spektralbereiche liegen hinsichtlich des Trocknens von thermisch zu behandelndem Gut bei λ = 2,7 µm bis 3,1 µm und beim Backen, Garen, Rösten und Frittieren bei λ = 3,3 µm bis 3,6 µm. Die relevanten Konzentrationen an Wellenbereich liegen je nach beabsichtigter Anwendung zwischen 1,5 und 9,5 µm, bevorzugt zwischen λ = 3,1 µm und λ = 3,6 µm.

Bei stabförmig bzw. rohrförmig ausgebildeten Emittern besteht das Erfordernis, Reflektoren vorzusehen, um die radiale Ausstrahlung der Infrarotstrahlung in alle

Richtungen zu vermeiden. Zur effektiven Nutzung möglichst der gesamten erzeugten Strahlungsenergie zur thermischen Behandlung des Gutes, ist der Einsatz wirkungsvoller Reflektoren geboten. Die eingesetzten Reflektoren sind unter der Maßgabe maximaler Ausnutzung der Strahlungsenergie und unter Beachtung der beabsichtigten Strahlungsausrichtung bei Anwendung der Reflektionsgesetze auszulegen. Die Oberflächen für diese Einsatzzwecke geeigneter Reflektoren sind idealerweise rein parabolisch beschaffen. Aus fertigungstechnischen Gründen ist die Oberfläche in der Praxis jedoch nur annähernd parabolisch ausgeführt. Ein geeignetes Material für die Reflektoren ist Edelstahl mit polierter Oberfläche, bei der sich Reflektionswerte von ca. 25 % einstellen. Edelstahl weist darüber hinaus eine hohe Beständigkeit gegenüber einer alkalischen oder saueren Anlagenatmosphäre bzw. gegenüber entsprechend reagierenden Reinigungsmitteln auf. Weiterhin kann als Reflektormaterial Aluminium mit Reflektionswerten von ca. 99 % eingesetzt werden. Schließlich lassen sich die Reflektoren in bestimmten Anwendungsfällen vergolden oder versilbern was zum Beispiel durch eine Beschichtung von Edelstahloberflächen möglich ist, so dass sich Reflektionswerte ≥ 99 % einstellen. Am Reflektor bzw. zu dessen Befestigung an einem Rahmen werden in Übereinstimmung mit sicherheitstechnischen Anforderungen an moderne Lebensmitteltechniken keine Nieten, Stifte, Schrauben oder leicht verschmutzbare Falz- oder Blechüberlappungen ausgeführt. Die erforderlichen Fügemaßnahmen werden weitestgehend durch Kleben, Stecken oder Schweißen realisiert.

Flachstrahler benötigen im Gegensatz zu den vorstehend beschriebenen Stab- bzw. Rohrstrahlern keine Reflektoren - siehe Figur 1. Der erfindungsgemäß vorgeschlagene Aufbau eines Flachstrahlers umfasst ein aus Seitenflächen und einem Boden bestehendes Gehäuse 9, eine thermische Isolierung 8, ein Energiesystem 7 sowie einen Keramikträger 2, der mit einer Funktionskeramik 3 beschichtet ist.

Die Infrarotstrahlen treten an der der Bodenseite des Gehäuses gegenüberliegenden Seite aus. Wie bei Stabstrahlern, so auch bei Flachstrahlern gelten je nach Einsatzzweck bestimmte Richtwerte, nämlich eine Emitterbreite zwischen 40 mm und 1.600 mm und eine Emitterlänge zwischen 250 mm und 4.000 mm. Die Emitterleistung pro Emitterfläche in der Größenordnung zwischen 1,25 kW/m² und 100 kW/m².

Die mit einem solchen Strahlertyp erreichbaren Vorteile liegen u.a. in der Minimierung der Bauhöhe über dem Band, auf dem das thermisch zu behandelnde Gut transportiert wird bzw. über dem Gut bei 20 mm bis 100 mm. Damit lassen sich einerseits kleinere Bauhöhen und andererseits weniger Strahlungsverluste erzielen. Schließlich können kürzere Entfernungen zwischen dem Emitter und dem thermisch zu behandelnden Gut eingehalten werden so dass die Reflektionsverluste minimiert sind. Als weiterer Vorteil ist zu nennen, dass sich eine größere Gleichmäßigkeit der Strahlung über der Fläche gegenüber Stabstrahlern mit Reflektor erzielen lässt. Ferner ist ein derart beschaffener Strahler durch geringere Strömungswiderstände charakterisiert, ferner bietet dieser günstigere Reinigungsmöglichkeiten. In Bezug auf die Funktionskeramik und die Beschichtung gelten die in Bezug auf Stabstrahler erwähnten Ausführungen analog auch für Flachstrahler. Bei diesen ist der Keramikträger als plattenförmiger Körper ausgebildet. Der Keramikträger erfüllt 3 Funktionen, nämlich die Aufnahme des Energiesystems, die Emission eines definierten Basisspektrums an elektromagnetischen Wellen entsprechend des eingesetzten Trägermaterials sowie die Aufnahme der Funktionskeramik auf der Oberfläche. Als geeignete Materialien für solcher Art beschaffene mehrfunktionale Keramikträger sind hochfeste amorphe Siliziumoxide (ROBAX) einsetzbar. Bei diesem Material ist ferner das werkstoffspezifische Emissionsspektrum für den beabsichtigten Einsatzzweck gut nutzbar. Als weiteres Material lässt sich Edelstahl bzw. andere thermisch gut belastbare Stahllegierungen einsetzen, welches eine absolute Bruchsicherheit gewährleistet. Ferner ist ein geeignetes Material eine Keramik aus Al₂O₃ mit einem Reinheitsgrad zwischen 50 % und 99,95 %. Dieses Material weist eine extrem hohe Bruchsicherheit bei gleichzeitiger Ausnutzung des werkstoffspezifischen Emissionsspektrums auf. Bei diesem Material ist die Funktionskeramik direkt auf das Energiesystem aufbringbar, so dass ein zusätzlicher Träger entfällt. Das Energiesystem und der Träger stellen ein Bauteil dar. Das Energiesystem kann in vorteilhafter Weise auf der Basis von Elektroenergie, Thermoöl oder Rauchgas basieren. Bei einem auf Elektroenergie basierenden Energiesysteme, kommen plattenförmige Keramiktafeln mit Kapillaren, in welche Nickel-Chrom-Widerstandsdrähte in gestreckter Form oder in Wendelform eingebracht sind, zum Einsatz. Bei Einsatz eines Energiesystems auf der Basis von Thermoöl bzw. Rauchgas, durchströmt das entsprechende Medium in einer definierten Menge je Zeiteinheit mit vorbestimmten Eintritts- und Austrittstemperaturen einen flach beschaffenen plattenförmigen Thermobehälter. Die Temperatur der emittierenden Fläche mit der Funktionskeramikschicht 3 liegt je nach Bedarf der Anwendung im Bereich zwischen 125°C bis 800°C.

Die Steuerung der Oberflächentemperatur der Funktionskeramik und damit der Strahlungsintensität erfolgt in Abhängigkeit vom Ist-Temperaturwert des Gutes und vom vorgegebenen Soll-Temperaturwert des Gutes, wobei diese Werte über Infrarotsensoren erfasst werden. Reicht beispielsweise in einem bestimmten Moment die Oberflächentemperatur des zu behandelnden Lebensmittelgutes 14 nicht aus, so ist die Durchflussmenge von Thermoöl bzw. Rauchgas und/oder die Temperatur dieser Medien zu erhöhen, um die gewünschten Temperaturen herbeizuführen.

Die gemäß des vorgeschlagenen Verfahrens eingesetzten Funktionskeramiken sind bevorzugt Metalloxide, die eine sehr hohe Emissionszahl ε aufweisen. Diese Funktionskeramiken, mit denen Trägermaterialien aus Stahl bzw. hochfesten Keramiken beschichtet sind, emittieren selektive, transformierte Infrarotstrahlung im Bereich einer Wellenlänge von λ = 3,3 bis 3,6 µm. Innerhalb dieses Spektralbereiches kommt es vorrangig zur gewünschten Anregung der Kohlenwasserstoffmoleküle im Gut wie z.B. Teig und nicht zur Verdampfung von Wasser. Dieser Spektralbereich eignet sich insbesondere zum schnellen und dennoch schonenden Backen und Garen von Lebensmittelgütern 14 bei denen in diesem Spektralbereich die C-H-Gruppen der Stärke, der Proteine, der Farbstoffe und der Aromstoffe angesprochen werden und weniger die zu erhaltenen O-H-Gruppen des Wassers. Damit trocknet das thermisch zu behandelnde Lebensmittelgut 14 nicht aus, da das Absorptionsspektrum der O-H-Gruppen, das bei etwa λ = 2,7 µm bis 3,1 µm liegt, weniger angesprochen wird.

Wird umgekehrt hingegen zum schnellen und schonenden Trocknen von Gütern ein Spektralbereich von λ = 2, 7 µm bis λ = 3,1 µm emittiert, werden eher die O-H-Gruppen im zu verdampfenden Wasser angeregt und weniger die zu erhaltenen C-H-Gruppen (Vitamine, Farbstoffe, Aromastoffe und Proteine). Beim Trocknen liegt das Emissionsspektrum der vom Emitter 13 emittierten selektiv transformierten Infrarotstrahlung 5 gemäß des Absorptionsspektrums der O-H-Gruppen im Bereich von λ = 2,7 µm bis λ = 3,1 µm. Beim Backen, Garen, Frittieren und Rösten liegt es gemäß des Absorptionsspektrums der C-H-Gruppen bei etwa λ =3,3 bis 3,6 µm.

Bei den Stabstrahler, Rohrstrahler oder Flachstrahlern 13 gemäß den Darstellungen in den Figuren 1.1 bis 1.3 erfolgt die Transformation, d.h. die Umformung der Strahlung von einem Spektralbereich in einen anderen wie folgt: Die Emission des Energiesystems 7 (z.B. elektrischer Widerstandsdraht oder warmes Rauchgas) emittiert bei einer sich einstellenden Temperatur innerhalb eines Spektralbereiches S1. Das Trägermaterial 2 des Emitters 13 nimmt diese Energie auf und transformiert diese entsprechend de beteiligten Werkstoffe (Moleküle) vom Spektrum S1 in das Spektrum S2. Die Funktionskeramikschicht 3 nimmt diese Energie auf und transformiert diese entsprechend der eingesetzten Werkstoffe (Moleküle) vom Spektrum S2 in ein weiteres, d.h. drittes Spektrum S3. Dies bedeutet, dass die Energiemenge entsprechend des Spektrums S3 nicht wie bei bekannten Filterprozessen übrig bleibt sondern sie entsteht durch das Transformieren aus dem Spektralbereich S2 diese wiederum aus dem Spektralbereich S1. Je nach Dichte und dem Reflektionsvermögen der Schichten des Trägermateriales 2 und der Funktionskeramikschicht 3 strahlen gegebenenfalls auch noch Anteile der Spektralbereiche S1 und S2, welche durchgelassen werden, zusammen mit dem Spektralbereich S3 nach Außen ab. Dies tritt vor allem bei Quarzgutröhren als Keramikträger 2 auf, die sehr dünn mit einer Funktionskeramikschicht 3 beschichtet sind.

Eine erhebliche Reduktion der Bruchgefahr der zum Abstrahlen der selektiven transformierten Infrarot-Strahlung eingesetzten Emitter stellt sich vorzugsweise beim Einsatz von Trägermaterialien aus Stahl bzw. hochfesten Keramiken ein.

Die Funktionskeramiken werden aus mindestens einer Komponente der folgenden Gruppe ausgewählt: Al₂O₃, BwO₃, CaO, CaCO₃, CaZrO₃, CeO₂, Ca₂O₃, CuO, FeO, Fe₂O₃, Fe₃O₄, Gd₂O₃, LaAl₂O₄, MgAl₂O₄, MgCa₂O₄, MgO, SiO₂, YCa₂O₃ sowie ZrO₂.
Die oben genannten bevorzugt eingesetzten Funktionskeramiken werden mit einem Beschichtungsverfahren wie z.B. Plasmabeschichtung oder Vakuumverdampfung bruchfest mit den Trägermaterialien verbunden.

Derart beschichtete Trägermaterialien werden an den oben genannten Stabstrahlern mit Reflektoren, die sich geometrisch optimal formen lassen oder an Flachstrahlern eingesetzt. Die derart aufgebauten Emitter zum Abstrahlen selektiver transformierter Infrarotstrahlung können prinzipiell wie folgt angeordnet werden:

Die Emitter strahlen selektive transformierte Infrarotstrahlung von oben auf ein im wesentlichen in der horizontalen des Ofens befindlichen Gutes ab, was insbesondere bei thermischen Behandlungsprozessen günstig ist, bei denen Fett oder Partikel nach unten austreten.

Die die selektive transformierte Infrarotstrahlung abstrahlenden Emitter können auch von unten und von oben auf das im wesentlichen in der Horizontalen befindliche, thermisch zu behandelnde Gut gerichtet sein, wodurch eine rasche und gleichmäßige thermische Behandlung erreicht wird.

Des weiteren lassen sich die die selektive transformierte Infrarotstrahlung emittierenden Emitter links und rechts in bzw. von der Hinterseite auf das in der Vertikalen befindliche Gut richten. Dies ist insbesondere bei solchen thermischen Behandlungsprozessen günstig, bei denen stark Fett oder Partikel nach unten abtropfen oder abfallen. Gleichzeitig lässt sich insbesondere bei beidseitiger Anordnung der selektive, transformierte Infrarotstrahlung emittierenden Emittern eine rasche und gleichmäßig thermische Behandlung erzielen.

Wird das thermisch zu behandelnde Gut kontinuierlich durch den Ofen bzw. den Arbeitsraum transportiert, können die Emitter, seien es Stabstrahler mit Reflektoren oder seien es Flachstrahler, in einer geringen Entfernung zum thermisch zu behandelnden Gut angeordnet sein. Die geringe Entfernung liegt beispielsweise zwischen 10 und 100 mm.

Bei im Arbeitsraum ruhenden, thermisch zu behandelnden Gut, können die selektive thermische Infratorstrahlung abstrahlenden Emitter in einer größeren Entfernung zum zu behandelnden Gut, so z.B. zwischen 100 und 200 mm von diesem entfernt aufgenommen sein.

Als konstruktive Lösungen für geeignete Öfen zum Backen, Garen, Rösten bzw. Frittieren können z.B. Einkammergeräte oder Einkammeröfen (vergleiche Figuren 4.1 und 4.2) zum Einsatz kommen. Die Herd- bzw. Rostfläche solcher Geräte liegt in der Größenordnung zwischen 25 bzw. 250 1 bzw. 100 bis 100 dm². Diese werden insbesondere in Haushalten bzw. in Kleingewerbebetrieben eingesetzt. Als spezielle Anwendungen des selektiven transformierten Infrarot-Prozesses (STIR-Prozesses) zum Backen, Garen, Rösten und Frittieren von thermisch zu behandelnden Lebensmittelgut 14 kommen rotierende Systeme in Frage so für rotierende Stückgüter wie z.B. zu garende Hähnchen oder zu backende Baumkuchen Anordnungen gemäß der Darstellung in Figur 5 oder für rotierende als Schüttgüter beschaffene thermisch zu behandelnde Lebensmittelgüter 14 (Schüttgüter wie Kaffee, Chips u.ä.) eine Anordnung gemäß der Darstellung in Figur 6 mit einer rotierenden Trommel 30.

Daneben können die selektive thermische Infrarotstrahlung abstrahlende Emitter 13 in Mehretagenöfen eingesetzt werden, die zwei bis zehn Etagen aufweisen (vergleiche Darstellung gemäß der Figuren 7.1 und 7.2). Mehretagenöfen weisen in der Regel Größenordnungen zwischen 0,32 bis 16 qm Herd- bzw. Rostfläche auf. Diese werden insbesondere in mittelgroßen Gewerbebetrieben eingesetzt. Ferner sind Tunnel- bzw. Bandanlagen mit den selektive transformierte Infrarotstrahlung emittierenden Emittern 13 versehen - vergleiche Darstellung gemäß Figur 8 -, die eine Herd- bzw. Rostfläche in der Größe von 1 m² bis 100 m² aufweisen und die im Kleingewerbebetrieben (Pizzerien) bis zu industriellen Großbetrieben zum Backen von Brot, Brötchen und Kleingebäck aber auch zum Garen, Rösten oder Frittieren von Fleisch, Fisch und Lebensmitteln pflanzlichen Ursprungs eingesetzt werden.

### Beispiele

### Beispiel 1

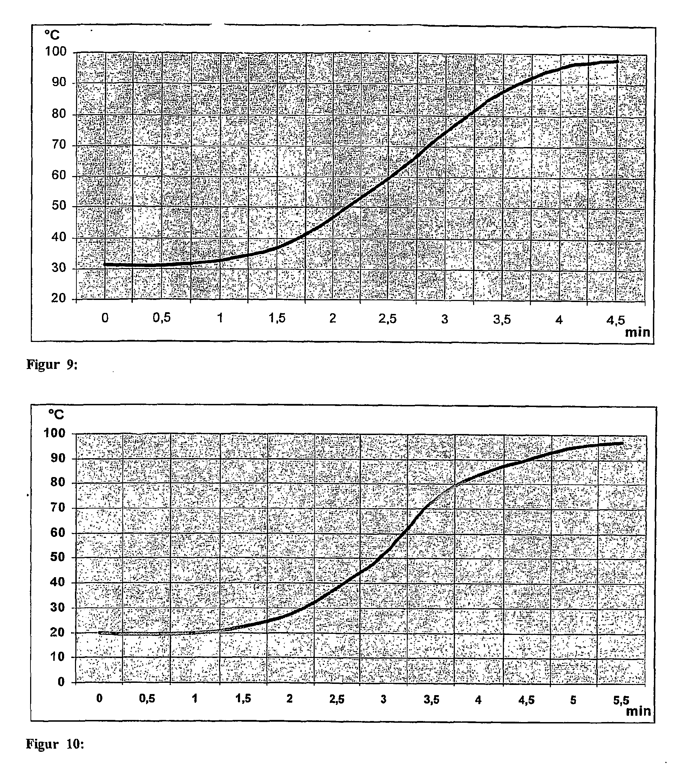

Aus Figur 9 geht der Verlauf der Vorbackzeit von Brötchen-Teiglingen bis zum Erreichen einer Kerntemperatur von 97°C gemäß des STIR-Prozesses hervor.

Dank des raschen und tiefen Eindringens der selektiven transformierten Infrarotstrahlung (STIR) lässt sich bei etwa 30 % der Backzeit - verglichen mit konventionellen Konvektionswärmebacktechniken - mit dem erfindungsgemäß vorgeschlagenen Verfahren eine Kerntemperatur von 97°C erreichen, bei der sich eine ausreichende Stabilisierung der Krume des Teiges einstellt. Der Temperaturverlauf, aufgetragen über die Zeit, ist aus Figur 9 am Beispiel eines Schnittbrötchens von (55,5 g Teig) dargestellt. Die Kerntemperatur von 97°C stellt sich bei der Verwendung des erfindungsgemäß vorgeschlagenen Verfahrens zum Backen des Teiges in dieser Größe bereits nach einer Zeit zwischen 4 und 4,5 Minuten ein, während die beim Backen mit Konvektionswärme erfolgende Stabilisierung der Krume erst nach 12 bis 15 Minuten erreicht wird.

Beim Vorbacken des Teiges mit selektiver transformierter Infrarotstrahlung ist keine besonders hohe Ofenraumtemperatur erforderlich - hier genügen theoretisch 20°C. Umgebungsluft-Temperatur. Die mit dem erfindungsgemäß vorgeschlagenen Verfahren gebackenen Teiglinge zeichnen sich durch eine stabile Form aus. Damit kann das erhaltene, gebackene Gut nach der Abkühlung normal verpackt, transportiert und gelagert werden. Die im Teig enthaltene Hefe ist vollständig gegangen und völlig abgetötet, wodurch eine gute Haltbarkeit der erhaltenen Backwaren ohne Zugabe von Zusatzstoffen ermöglicht ist. Es lässt sich insbesondere eine längere Lagerung im ungekühlten Zustand erreichen. Ziel des Vorbackens ist es, die Brötchen-Teiglinge so vorzubehandeln, dass sich u.a. noch keine Kruste gebildet hat. Die Krustenbildung soll beim Fertigbacken erfolgen. Je frischer die Außenhaut des Teiglings ist, umso besser (Backzeit, Qualität und Energieeinsatz) lässt sich der Brötchen-Teigling fertig backen. Sichtbarer Ausdruck für die frische Außenhaut des Teiglings ist ein nahezu weißes Aussehen.

Es stellt sich ein hoher Feuchtegehalt am erhaltenen Fertigprodukt ein, da der Backverlust hinsichtlich der Feuchte lediglich 3 bis 4 g beträgt, verglichen mit der frischen Teigmasse von 55,5 g. Daraus ergeben sich zwei weitere Vorteile: Das Einfrieren solcher Rohlinge ist aufgrund der hohen Feuchte effektiver und kann wesentlich schneller erfolgen. Ein späteres Fertigbacken mit oder ohne vorherigem Kühlen ist mit weniger Feuchteverlust verbunden. Die besten Ergebnisse werden bei einer thermischen Behandlung mit selektiver transformierter Infrarotstrahlung bei einer Emittertemperatur zwischen 400°C und 500°C und Ofenraumtemperaturen im Bereich von 100°C erreicht. Die Kerntemperatur von 97°C entsteht bei Brötchen bei einem Eigengewicht von 55,5 g im ungebackenen Zustand bereits nach 3,5 bis 4 Minuten.

### Beispiel 2

Figur 10 zeigt die Fertigbackzeit eines vorgebackenen Brötchen-Teiglings bis zum Erreichen einer Kerntemperatur von 97°C mit dem STIR-Verfahren.

Beim Fertigbacken von Brötchen unter Einsatz des erfindungsgemäß vorgeschlagenen Verfahrens wird die Kerntemperatur von Brötchen mit ca. 50 g nach etwa 5,5 Minuten Backzeit erreicht, wie aus Figur 10 hervorgeht. Die Temperatur von 97°C wird beim Fertigbacken von Brötchen mit Konvektionswärme erst nach 10 bis 12 Minuten erreicht.

Sowohl beim gewerblichen als auch beim großindustriellen Backen besteht eine aktuell vorherrschende Tendenz dahingehend, die zwei Stufen des Backprozesses (insbesondere bei Brötchen) in zwei zeitlich voneinander getrennte Abschnitte aufzuteilen. Industriell wird heute bereite ein sehr beachtlicher Teil von Brötchen auf diese Art und Weise billig vorgebacken und zu einem günstigen Preis verkauft. Die vorgebackenen Brötchen-Teiglinge werden dann in Haushalten und im kleingewerblichen Bereich zu einem späteren Zeitpunkt, der bis zu 2 Monate später liegen kann, fertig gebacken. Das Hauptproblem gemäß dieser Vorgehensweise liegt in der schlechteren Qualität, die insbesondere auf einem zu geringen Feuchtigkeitsgehalt und gegebenenfalls einer Geschmacksbeeinträchtigung durch Zusatzstoffe berührt. Ein frisch vom Bäcker gebackenes Brötchen ist zwar erheblich teurer, jedoch wesentlich schmackhafter. In kleinen handwerklich organisierten Bäckereibetrieben kann durch das zeitliche Trennen des Vorbackens und des Fertigbackens die Kapazität leidlich besser genutzt werden. Der handwerkliche Bäcker ist jedoch gezwungen, zwischen 5 bis 8 Mal mehr Kühlflächen für Zwischenlagerungen vorgebackener Brötchen-Teiglinge vorzuhalten als Backflächen zum Fertigbacken von Brötchen. Auch hier gibt es beim Endprodukt die ähnlichen Qualitätsprobleme wie in der oben beschriebenen Fertigungskette beim gewerblichen oder beim großindustriellen Backen.

Bei Einsatz des STIR-Prozesse, wie obenstehend und nachfolgend beschrieben, wird jedoch in vorteilhafter Weise ermöglicht, am Ende eines Fertigbackprozesses ein Backprodukt von hoher Qualität hinsichtlich Feuchte und geringen Zusatzstoffgehaltes zu erhalten, die der eines frischen, durchgängig gebackenen Backproduktes entspricht. Mit dem erfindungsgemäß vorgeschlagenen Verfahren lässt sich die zeitliche Trennung der beiden Backabschnitte des Vorbackens und des Fertigbackens zum Nutzen aller Beteiligten wie z.B. Bäckereibetrieben, Zwischenhändler und Endkunden wesentlich verbessern.

Hinzuzurechnen ist bei diskontinuierlich betriebenen Öfen deren Vorwärmzeit, die je nach Typ zwischen 10 und 50 Minuten liegen kann. Bei optimal gestalteten Öfen, die nach dem erfindungsgemäß vorgeschlagenen Verfahren betrieben werden, lässt sich der aktive Backzustand bereits nach 2 bis 10 Minuten erreichen. Beim Fertigbacken unter Einsatz des erfindungsgemäß vorgeschlagenen Verfahrens ist eine höhere Ofenraumtemperatur anstrebenswert, um die Bräunung der Kruste der Teiglinge zu unterstützen. Die mittels selektiver, transformierter Infrarotstrahlung fertig gebackene Teiglinge zeichnen sich durch sehr kurze Vorbereitungs- und Fertigbackzeiten und damit durch eine rasche Verfügbarkeit von frisch fertiggebackenen Brötchen aus. Es lässt sich ein relativ hoher Feuchtegehalt erzielen, der 5 bis 8 % über dem Vergleichswerten von Brötchen liegt, die mit Konvektionswärme fertiggebacken werden. Daraus resultieren ein angenehmerer Geschmack, ein länger anhaltender Frischezustand sowie eine Abtötung potentiell im und am Teig befindlicher Mikroorganismen. Ferner ist eine beliebig einstellbare Kruste unterschiedlichen Bräunungsgrades von weich bis kross erreichbar - verteilt über die gesamte Oberfläche der fertiggebackenen Brötchen.

Die besten Ergebnisse lassen sich bei einer Emittertemperatur erreichen, die zwischen 400 und 500°C liegt sowie Ofenraumtemperaturen, die im Bereich von etwa 220°C liegen. Die Kerntemperatur von 97°C und die optimale Bräunung bei Brötchen eines Gewichtes von ca. 50 g stellen sich bereits nach 4 bis 7 Minuten Fertigbackzeit ein. Einen entscheidenden Einfluss auf die Ergebnisse hat eine optimale Oberflächenfeuchte sowie eine Beschwadung (Einbringen von Dampf) während die Brötchen mit selektiver transformierter Infrarotbestrahlung thermisch behandelt werden.

### Beispiel 3

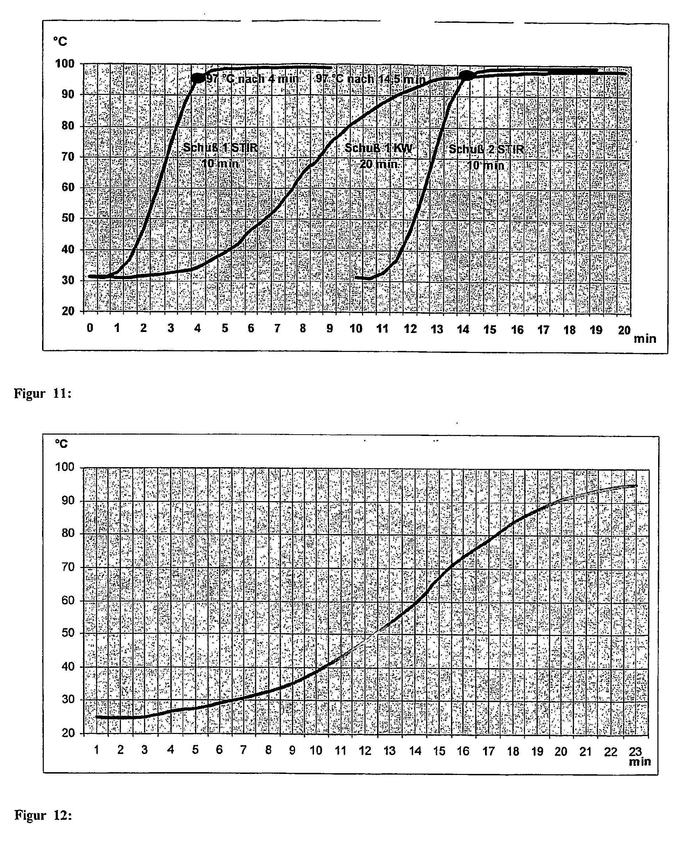

Aus Figur 11 geht ein Vergleich der Backzeit von Brötchen, die nach dem Konvektionsprinzip gebacken und nach dem erfindungsgemäß vorgeschlagenen Verfahren der selektiven transformierten Infrarotstrahlung (STIR) gebacken werden, hervor.

Beim Backen von Brötchen unter Einsatz des erfindungsgemäß vorgeschlagenen Verfahrens, d.h. mit einer Bestrahlung von selektiver transformierter Infrarotstrahlung eines Wellenlängenbereiches zwischen 3,3 µm und 3,6 µm, werden die zuvor beschriebenen Wesensmerkmale und Ergebnisse in einem durchgängigen Prozess vom Abschluss der Gare bis zum Fertigbacken sichtbar.

Das Beispiel wird anhand von Figur 11 beschrieben. Bei Einsatz des erfindungsgemäßen Verfahrens an einem Ofen (Herd 1) mit einer Temperatureinstellung von 275°C Oberhitze und 225°C Unterhitze und einem Ofen (Herd 3 Konvektionswärme) mit 240°C Oberhitze und 220°C. Da die Temperaturangaben sich auf die Temperatur der Luft im Ofenraum bezieht, ist diese Einstellung für den Herd 1 nur von sekundärer Bedeutung, da die die selektive transformierte Infrarotstrahlung emittierenden Emitter ausreichend aktiv sind.

Beide Herde, d.h. Herd 1 und Herd 3 wurden voll mit je 30 Brötchen von 55,5° Eigengewicht gleichzeitig belegt. Nach 10 Minuten war die erste Charge im Herd 1 mit selektiver transformierter Infrarotstrahlung emittierenden Emittern bereits fertiggebacken. Die die Brötchen aufnehmenden Bleche wurden gezogen und der Herd 1 abermals mit 30 Brötchen (55,5 g) beschickt. Zu diesem Zeitpunkt lag die Kerntemperatur der Brötchen im Herd 3 erst bei 77°C und die Bräunung hatte noch nicht eingesetzt. Nach 20 Minuten war die zweite Charge im Herd 1 erneut fertiggebacken. Die Bleche wurden gezogen. Erst unmittelbar danach konnten auch die Bleche von Herd 3, der konventionell unter Einsatz von Konvektionswärme betrieben wurde, gezogen werden. Aus diesem Beispiel geht hervor, dass bei gleichen eingesetzten Herdflächen unter Einsatz des erfindungsgemäß vorgeschlagenen Verfahrens eine Verdoppelung der Produktivität von Backöfen erreicht werden kann.

Mit dem erfindungsgemäß vorgeschlagenen Verfahren lässt sich ferner eine drastische Reduzierung des Energieverbrauches, mehr als eine Halbierung erreichen, vergleiche nachstehende Tabelle:

| | | **KW** | **STIR** |
|---|---|---|---|
| Backgut | kg je Schuß | 1,329 | 1,437 |
| Energieverbrauch | Wh je Schuß | 437 | 260 |
| Spezifischer Energieverbrauch | Wh je kg | 329 | 160 |

Die Qualität der gebackenen Brötchen ist durch einen hohen Frischegehalt gekennzeichnet. Der Backverlust lag mit dem erfindungsgemäß vorgeschlagenen Verfahren gebackenen Brötchen bei 7,6 g (= 13,7 %), während dieser bei konventionell behandelten Brötchen bei 11,2 g (entspricht 20,2 %) lag. Damit enthielten die mit dem erfindungsgemäß vorgeschlagenen Verfahren erbackenen Brötchen 3,6 g mehr Feuchte, das entspricht einer Steigerung des Feuchtegehaltes um 32 %. Dieser Feuchtevorteil ist verbundenen mit einem wesentlich angenehmeren Geschmack, einer wesentlich längeren Lagerfähigkeit im "Frischezustand" sowie einer Chance zum Wiederaufbacken. Die Krume wies eine hohe Elastizität auf, ferner war die Porenausbildung wesentlich gleichmäßiger. Die Kruste war durch eine beliebig vorwählbare Bräunung gekennzeichnet, wobei diese auch an den Seitenflächen der Brötchen erreichbar war. Die erbackenen Brötchen enthielten einen etwa 8 % größeres Volumen. Das Backbild der Brötchen war sowohl von links als auch von rechts als auch von vorne bis hinten durch eine hohe Gleichmäßigkeit gekennzeichnet.

Die Rohteiglinge waren nicht verhautet und hatten eine optimale Gare von etwa 40 Minuten bei 75 % Feuchte und 35°C durchlaufen und waren optimal beschwadet was durch eine mäßige Temperatur des Dampfes erreichbar ist.

### Beispiel 4

Figur 12 ist der Backzeitverlauf eines Brotlaibes, welcher mit dem erfindungsgemäßen STIR-Verfahrens gebacken wird, zu entnehmen, bis eine Temperatur von 97°C erreicht ist.

Beim Backen von Brot, was aufgrund der Größe der Laibe wesentlich längere Zeit in Anspruch nimmt, war bereits nach 22 Minuten die erforderliche Kerntemperatur von 97°C erreicht, wie aus Figur 12 hervorgeht.

Im Vergleich zum Backen mit Konvektionswärme, war die Backzeit von 45 Minuten auf 22 Minuten herabgesetzt. Dies bedeutet ebenfalls eine Halbierung der Backzeit bzw. eine Verdoppelung der Produktivität von mit dem erfindungsgemäß vorgeschlagenen Verfahren behandelten Teiglingen pro m². Im Vergleich zum Backen mit Konvektionswärme konnte der Energieaufwand von 350 auf 164 Wh je kg Teig reduziert werden. Die Qualität der erhaltenen Brotlaibe war durch einen hohen Frischegehalt gekennzeichnet. Der Backverlust lag bezogen auf eine Frischeeinwaage von 750 g bei Backen mit Konvektionswärme bei 74,6 g )= 9,8 %) und bei Behandlung mit dem erfindungsgemäß vorgeschlagenen Verfahren bei 60,0 g (= 7,9 %). Die mit dem erfindungsgemäß vorgeschlagenen Verfahren gebackenen Brote enthielten 5,4 g mehr Feuchte, was einer Steigerung des Feuchtegehaltes von 20 % gleichkommt. Dieser Anstieg des Feuchtegehaltes ist verbunden mit einem angenehmen Geschmack und einer wesentlich längeren Lagerfähigkeit der gebackenen Brote im "Frischezustand". Die Krume zeichnete sich durch hohe Elastizität, gleichmäßige Ausbildung feiner Poren aus. Die Kruste wies eine beliebige Bräunung je nach Bedarf sowie eine Bräunung auch an den Seitenflächen auf.

### Beispiel 5

Mit dem erfindungsgemäß vorgeschlagenen Verfahren lassen sich auch verschiedene Gebäckarten gebacken so z.B. Weichkekse aus Mürbeteig, d.h. drei Masseanteilen Mehl, zwei Masseanteilen Butter und einem Masseanteil Zucker, Hartkekse, russisches Brot, Zwiebacke, Kuchen, Tortenböden, Pizzen, Kartoffelgebäck, Lebkuchen.

Die gebackenen aufgezählten Gebäckarten zeichneten sich durch eine hohe Feuchte, eine feine gleichmäßige Krume, einen sehr guten Erhalt von Aromastoffen und Wertbestandteilen so z.B. Vitamin B sowie eine Reduzierung der Mikroorganismen und schließlich durch ein gleichmäßiges Backbild aus.

### Bezugszeichenliste

- 1: Kern
- 2: Keramikträger
- 3: Funktionskeramikschicht
- 4: Reflektor
- 5: selektiv transformierte Infrarotstrahlung(STIR)
- 6: Kapillare, Öffnung
- 7: Energiesystem
- 8: thermische Isolierung
- 9: Gehäuse
- 10: Widerstandsdraht
- 11: Keramiktafel
- 12: Plattenthermobehälter
- 13: Emitter
- 14: thermisch zu behandelndes Lebensmittelgut
- 15: Auflage
- d: Durchmesser Stab-/Rohremitter
- b_{R}: breite Reflektoröffnung
- h_{R}: Reflektorhöhe
- b: Emitterbreite
- l: Emitterlänge
- a: Abstand Emitter 13-Gut 14
- s: Abstand Emitter-Emitter
- 19: Rahmen
- 20: Schutzgitter
- 21: Endstück mit Kontakt
- 22: Verkabelung
- 23: Kontaktaufnahme
- 24: Infrarotsensor / Thermoelement
- 25: Verbindungsstrebe
- 26: Kontaktabdeckung
- 27: Speicherprogrammierbare Steuerung
- 28: Thoristor
- 29: Wandler für Infrarotsensor / Thermoelement
- 30: Trommel
- 31: Trommelwandung
- 32: Drehsinn
- 33: erste Kammer
- 34: zweite Kammer
- 35: dritte Kammer
- 36: Isolationsschicht
- 37: Durchlaufrichtung

## Patentansprüche

1. Verfahren zum Backen, Garen, Rösten oder Frittieren von Lebensmittelgütern (14) oder. zum Trocknen derselben in Öfen oder dergleichen mit folgenden Verfahrensschritten:
a) Erzeugung von elektromagnetischer Strahlung in einem primären Emitter durch Zufuhr von elektrischer Energie, chemischer Energie oder Wärmeenergie,
b) Erwärmung einer Funktionskeramikschicht (3) *aus einem Keramikmaterial, welches mindestens eine Komponente aus der folgenden Gruppe enthält: Al₂O₃, B₂O₃, CaO, CaCo₃, CaZrO₃, CeO₃, Cr₂O₃, CuO, FeO, Fe₂O₃, Fe₃O₄, Gd₂O₃, LaAl₂O₄, MgAl₂O₄, MgCa₂O₄, MgO, SiO₂, YCa₂O₃ und ZrO₂* des Emitters (13) durch Bestrahlung und/oder Wärmeübergang vom primären Emitters zur Erzeugung einer selektiven transformieren Infrarotstrahlung und
c) Bestrahlung des zu behandelnden Lebensmittelgutes (14) mit selektiver transformierter Infrarotstrahlung (5) in einem Wellenlängenbereich λ = 3,1 µm bis λ = 3,6 µm oder λ = 2,7 µm bis λ = 3,1 µm, wobei das thermisch zu behandelnde Lebensmittelgut (14) mit selektiver transformierter Infrarotstrahlung (5) in Bezug auf den Arbeitsraum einseitig, oder von mehreren Seiten, horizontal, vertikal oder schräg in Ruhe oder in Bewegung bestrahlt wird, und
d) im thermisch zu behandelnden Lebensmittelgut (14) enthaltenen Wassermoleküle, die bevorzugt im Spektralbereich von λ = 2,7 µm bis λ = 3,1 µm absorbieren, nicht angeregt werden und das thermisch zu behandelnde Lebensmittelgut (14) geringer entfeuchtet wird

2. Verfahren gemäß Anspruch 1, **dadurch gekennzeichnet, dass** die im thermisch zu behandelnden Lebensmittelgut (14) enthaltene Kohlenwasserstoffmoleküle, die bevorzugt im Spektralbereich von λ = 3,2 µm bis λ = 3,5 µm absorbieren nicht angeregt und damit nicht zerstört werden und damit schonend im Bereich von λ = 2,7 µ bis λ = 3,1 µm getrocknet werden.

3. Verfahren gemäß Anspruch 1, **dadurch gekennzeichnet, dass** das im Arbeitsraum befindliche, thermisch zu behandelnde Lebensmittelgut (14) in Bezug auf das in der Horizontalen befindliche Gut von unten und von oben mit selektiver transformierter Infrarotstrahlung (5) bestrahlt wird.

4. Verfahren gemäß Anspruch 1, **dadurch gekennzeichnet, dass** das in einem Arbeitsraum im wesentlichen in der Vertikalen befindliche Lebensmittelgut (14) von links und rechts und/oder von der Hinterseite mit selektiver transformierter Infrarotstrahlung (5) bestrahlt wird.

5. Verfahren gemäß Anspruch 1, **dadurch gekennzeichnet, dass** ein durch den Arbeitsraum kontinuierlich oder diskontinuierlich bewegtes thermisch zu behandelndes Lebensmittelgut (14) aus einer Entfernung zwischen 10 mm und 100 mm mit selektiver transformierter Infrarotstrahlung (5) bestrahlt wird.

6. Verfahren gemäß Anspruch 1, **dadurch gekennzeichnet, dass** das im Arbeitsraum entweder in der Horizontalen oder in der Vertikalen befindliche, ruhende Lebensmittelgut (14) mit selektiver transformierter Infrarotstrahlung (5) aus einer Entfernung zwischen 100 mm und 200 mm bestrahlt wird.

7. Verfahren gemäß Anspruch 1, **dadurch gekennzeichnet, dass** das in den Arbeitsraum das thermisch zu behandelnde Lebensmittelgut (14) in der Vertikalen oder der Horizontalen aufgenommene Lebensmittelgut (14) mit Dampf befeuchtet wird.

8. Vorrichtung zur Durchführung des Verfahrens gemäß einem oder mehreren der Ansprüche 1 bis 7, **dadurch gekennzeichnet, dass** im Arbeitsraum wenigstens ein Infrarot-Emitter (13) zur Abstrahlung selektiver transformierter Infrarotstrahlung (5) aufgenommen ist, **dadurch gekennzeichnet, dass** dieser einen Funktionalkörper (3) aus einem Keramikmaterial und einen Träger (2) aus einem Trägermaterial aufweist, wobei das Keramikmaterial mindestens eine Komponente aus der folgenden Gruppe enthält: Al₂O₃, B₂O₃, CaO, CaCo₃, CaZrO₃, CeO₃, Cr₂O₃, CuO, FeO, Fe₂O₃, Fe₃O₄, Gd₂O₃, LaAl₂O₄, MgAl₂O₄, MgCa₂O₄, MgO, SiO₂, YCa₂O₃ und ZrO₂.

9. Vorrichtung gemäß Anspruch 8, **dadurch gekennzeichnet, dass** der Funktionalkörper (3) eine mittels Plasmabeschichtung auf den Träger (2) aufgebrachte Schicht ist.

10. Vorrichtung gemäß Anspruch 8, **dadurch gekennzeichnet, dass** der Funktionalkörper (3) eine mittels Vakuumbedampfung auf den Träger (2) aufgebrachte Schicht ist.

11. Vorrichtung gemäß einer der Ansprüche 8 bis 10, **dadurch gekennzeichnet, dass** der Funktionalkörper (3) eine Schicht auf den Träger (2) ist, die im wesentlichen aus einer Komponente besteht.

12. Vorrichtung gemäß einem der Ansprüche 8 bis 10, **dadurch gekennzeichnet, dass** der Funktionalkörper (3) eine Schicht auf dem Träger (2) mit mindestens zwei Einzelschichten ist, wobei die Einzelschichten im wesentlichen aus je einer Komponente bestehen.

13. Vorrichtung gemäß der Ansprüche 8 bis 10, **dadurch gekennzeichnet, dass** der Funktionalkörper (3) eine Schicht auf dem Träger (2) ist, die aus einer Legierung aus mindestens zwei Komponenten besteht.

14. Vorrichtung gemäß einer der Ansprüche 8 bis 13, **dadurch gekennzeichnet, dass** die Schicht eine Dicke < 1 mm aufweist.

15. Vorrichtung gemäß einem der Ansprüche 8 bis 14, **dadurch gekennzeichnet, dass** das Trägermaterial mindestens eine Komponente aus der folgenden Gruppe enthält: Al₂O₃, B₂O₃, CaO, CaCo₃, CaZrO₃, CeO₃, Cr₂O₃, CuO, FeO, Fe₂O₃, Fe₃O₄, Gd₂O₃, LaAl₂O₄, MgAl₂O₄, MgCa₂O₄, MgO, SiO₂, YCa₂O₃ und ZrO₂.

16. Vorrichtung gemäß einem der Ansprüche 8 bis 15, **dadurch gekennzeichnet, dass** die Komponenten einen Reinheitsgrad zwischen 50 % und 98 % aufweisen.

17. Vorrichtung gemäß einem der Ansprüche 8 bis 16, **dadurch gekennzeichnet, dass** das Funktionsmaterial 15 bis 35 Gew.-% Al₂O₃, 5 bis 55 Gew.-% Ca₂O₃ und 30 bis 60 Gew.-% SiO₂ enthält.

18. Vorrichtung gemäß einem der Ansprüche 8 bis 17, **dadurch gekennzeichnet, dass** das Funktionalmaterial 2 bis 7 Gew,-% CaO, 30 bis 50 Gew.-% Ca₂O₄, 30 bis 40 Gew.-% Fe₂O₃, 3 bis 7 Gew.-% MgO und 10 bis 20 Gew.-% SiO₂ enthält.

19. Vorrichtung gemäß einem der Ansprüche 8 bis 18, **dadurch gekennzeichnet, dass** das Funktionalmaterial im wesentlichen SiO₂ enthält.

20. Vorrichtung gemäß einem der Ansprüche 8 bis 19, **dadurch gekennzeichnet, dass** das Trägermaterial im wesentlichen Stahl enthält.

21. Vorrichtung gemäß Anspruch 8 mit einem Infrarot-Emitter, ausgebildet als Stabstrahler, **dadurch gekennzeichnet, dass** eine Außenseite eines rohrförmigen Keramikträgers (2) mit einer Funktionskeramikschicht (3) versehen ist, wobei im Innenraum des Keramikträgers (2) ein Kern (1) aufgenommen ist, welcher in Längsrichtung verlaufende Kapillaren (6) aufweist und den Kapillaren (6) Heizeinrichtungen (7) zugeordnet sind wobei im definierten Abstand zu dem Keramikträger (2) ein Reflektor (4) zur Ausrichtung von Infrarotstrahlung (5) auf thermisch zu behandelndes Lebensmittelgut (14) positioniert ist.

22. Vorrichtung nach Anspruch 21, **dadurch gekennzeichnet, dass** dieser einen Emitterdurchmesser d zwischen 6 mm und 20 mm aufweist, eine Reflektoröffnung b_{R} zwischen 40 mm und 200 mm aufweist, eine Reflektorhöhe h im Bereich zwischen 400 mm und 100 mm liegt, die Emitterlänge zwischen 250 und 1.600 mm liegt und die Emitterleistung pro Emitterlänge 0,1 kW/m und 2 kW/m liegt und die auf die Emitterfläche bezogene Emitterleistung zwischen 1,25 kW/m² und 100 kW/m² beträgt.

23. Vorrichtung gemäß Anspruch 21, **dadurch gekennzeichnet, dass** der Kern (1) aus keramischen Werkstoff, vorzugsweise Al₂O₃ gefertigt ist und wenigstens eine Kapillare (6) enthält.

24. Vorrichtung gemäß Anspruch 21, das als Heizeinrichtung fungierende langgestreckte Nickel-Chrom-Widerstandsdrähte (10) in die Kapillaren (6) des Kernes (1) eingebracht sind, wobei eine minimale Temperatureinrichtung ≤ 5 % bezogen auf die gesamte Länge des Emitters durch die Dimensionierung des Kernes (1) und der mindestens einen Kapillare (6) sowie der Nickel-Chrom-Widerstandsdrähte (10) erreicht wird.

25. Vorrichtung gemäß Anspruch 21, **dadurch gekennzeichnet, dass** der mit den Nickel-Chrom-Widerstandsdrähten (10) komplettierte Kern (1) in den Keramikträger (2) einsetzbar ist.

26. Vorrichtung gemäß Anspruch 21, **dadurch gekennzeichnet, dass** der Keramikträger (2) ein Quarzgut wie beispielsweise kristallines SiO₂ umfasst, aus Edelstahl oder Keramik, insbesondere Al₂O₃ mit einem Reinheitsgrad zwischen 50 % und 99,95 % und bei Einsatz von keramischem Material oder Quarzgut, der Kern (1) und der Keramikträger (2) ein Bauteil darstellen.

27. Vorrichtung gemäß Anspruch 21, **dadurch gekennzeichnet, dass** die Funktionskeramikschicht (3) als gesinterte Dünnschicht in einer Dicke zwischen 5 µm und 30 µm auf die Oberfläche des Keramikträgers (2) haftend aufgebracht ist.

28. Vorrichtung gemäß Anspruch 21, **dadurch gekennzeichnet, dass** die Temperatur der Funktionskeramik (3) zwischen 100°C und 1000°C liegt und eine Gesamtmenge an Strahlungsintensität pro Flächeneinheit erzeugt, die in Wellenlängenbereichen zwischen 1,5 µm und 9,5 µm liegt.

29. Vorrichtung gemäß Anspruch 21, **dadurch gekennzeichnet, dass** die Reflektoren (4) eine Oberfläche aufweisen, die annähernd parabolisch ausgebildet ist.

30. Vorrichtung gemäß Anspruch 29, **dadurch gekennzeichnet, dass** die Reflektoren (4) aus Edelstahl mit polierter Oberfläche und einem Reflektionswert von ca. 95 % gefertigt sind oder die Reflektoren (4) aus einer Aluminiumlegierung mit einem Reflektionswert von ca. 99 % gefertigt sind oder die Reflektoren (4) aus Stahl gefertigt und mit Gold oder Silber beschichtet sind und einen Reflektionswert von ca. 99 % aufweisen.

31. Vorrichtung gemäß Anspruch 8 mit einem Infrarot-Emitter (13), der als Flachstrahler ausgebildet ist, **dadurch gekennzeichnet, dass** ein nach einer Seite offenes Gehäuse (9) in Strahlungsrichtung betrachtet mit einer thermischen Isolierung (8), einem Energiesystem (7), einem Keramikträger (2) und einer Funktionskeramik (3) schichtweise ausgefüllt ist, wobei selektiv transformierte Infrarotstrahlungen (5) an der offenen Seite des Gehäuses (9) austritt.

32. Vorrichtung gemäß Anspruch 31, **dadurch gekennzeichnet, dass** dieser eine Emitterbreite b_{E} zwischen 40 mm und 1600 mm aufweist, eine Emitterlänge 1 zwischen 250 mm und 4000 mm aufweist und einen Emitterabstand s zwischen 10 mm und 300 mm aufweist, wobei die Emitterleistung pro Emitterfläche zwischen 1,25 kW/m² und 100 kW/m² beträgt.

33. Vorrichtung gemäß Anspruch 31, **dadurch gekennzeichnet, dass** der Keramikträger (2) aus einem bruchfesten kristallinen Siliziumoxid (Keramikglas) gefertigt ist oder aus Edelstahl oder hochfester Keramik, insbesondere Al₂O₃ mit einem Reinheitsgrad zwischen 50 % und 99,95 % gefertigt ist.

34. Vorrichtung gemäß Anspruch 31, **dadurch gekennzeichnet, dass** das Energiesystem (7) auf Basis von Elektroenergie eine plattenförmige Keramiktafel (11) umfasst, in welche Kapillaren (6) eingelassen sind, in die Nickel-Chrom-Widerstandsdrähte (10) in gestreckter Form eingebracht sind.

35. Vorrichtung gemäß Anspruch 31, **dadurch gekennzeichnet, dass** das Energiesystem (7) auf Basis flüssiger bzw. oder gasförmiger Energieträger als flacher Plattenthermobehälter (12) mit einem Zustrom und einem Abstrom ausgebildet ist und der Plattenthembobehälter (12) vom eingesetzten Medium mit einer Temperatur zwischen 80°C und 800°C durchströmt wird und auf einer einem Arbeitsraum zuweisenden Seite eine Funktionskeramik (3) aufweist, während die gegenüberliegende Seite thermoisoliert ist.

36. Vorrichtung gemäß Anspruch 8 mit einem Infrarot-Emitter (13), ausgebildet als Rohremitter, **dadurch gekennzeichnet, dass** der Träger (2) rohrförmig ausgebildet ist und das Heizsystem (7) umschließt, wobei der Keramikträger (2) an seiner Außenseite mit einer Funktionskeramikschicht (3) zur allseitigen Abstrahlung von selektiv transformierter Infrarotstrahlung (5) beschichtet ist.

37. Verfahren gemäß Anspruch 1, **dadurch gekennzeichnet, dass** das thermisch zu behandelnde Lebensmittelgut (14) mit selektiv transformierter Infrarotstrahlung (5) innerhalb eines Temperaturbereiches des thermisch zu behandelnden Lebensmittelgutes von 40°C bis 80°C warm gehalten wird.

38. Verfahren gemäß Anspruch 1, **dadurch gekennzeichnet, dass** beim Backen von Brötchen-Teiglingen durch Behandlung mit selektiv transformierter Infrarotstrahlung (5) die Teilschritte Vorbacken und Fertigbacken des Backprozesses beliebig zeitlich voneinander trennbar sind.

## Claims

1. Method for baking, cooking, roasting or deep-frying food (14) or drying it in an oven or the like, comprising the following method steps:
a) generating electromagnetic radiation in a primary emitter by supplying electrical energy, chemical energy or heat energy,
b) heating a functional ceramic layer (3) *made of a ceramic material which contains at least one component from the following group: Al₂O₃, B₂O₃, CaO, CaCO₃, CaZrO₃, CeO₃, Cr₂O₃, CuO, FeO, Fe₂O₃, Fe₃O₄, Gd₂O₃, LaAl₂O₄, MgAl₂O₄, MgCa₂O₄, MgO, SiO₂, YCa₂O₃ and ZrO₂* of the emitter (13) by irradiation and/or heat transfer from the primary emitter in order to generate selective converted infrared radiation and
c) irradiating the food (14) to be treated with selective converted infrared radiation (5) in a wavelength range of from λ = 3.1 µm to λ = 3.6 µm or from λ = 2.7 µm to λ = 3.1 µm, the food (14) to be heat-treated being irradiated with selective converted infrared radiation (5), in relation to the working space, on one side, or from a plurality of sides, horizontally, vertically or obliquely while stationary or in motion, and
d) water molecules contained in the food (14) to be heat-treated, which preferentially absorb in the spectral range of from λ = 2.7 µm to λ = 3.1 µm, are not excited and the food (14) to be heat-treated is dehydrated to a lesser extent.

2. Method according to Claim 1, **characterized in that** hydrocarbon molecules contained in the food (14) to be heat-treated, which preferentially absorb in the spectral range from λ = 3.2 µm to λ = 3.5 µm, are not excited and are therefore not broken down, and are therefore nondestructively dried in the range of from λ = 2.7 µm to λ = 3.1 µm.

3. Method according to Claim 1, **characterized in that** the food (14) to be heat-treated, placed in the working space, is irradiated with selective converted infrared radiation (5) from below and from above with respect to the food placed horizontally.

4. Method according to Claim 1, **characterized in that** the food (14) placed essentially vertically in a working space is irradiated from the left and right and/or from the rear side with selective converted infrared radiation (5).

5. Method according to Claim 1, **characterized in that** food (14) to be heat-treated, while moved continuously or discontinuously through the working space, is irradiated from a distance of between 10 mm and 100 mm with selective converted infrared radiation (5).

6. Method according to Claim 1, **characterized in that** the stationary food (14), placed in the working space either horizontally or vertically, is irradiated with selective converted infrared radiation (5) from a distance of between 100 mm and 200 mm.

7. Method according to Claim 1, **characterized in that** the food (14) to be heat-treated, contained vertically or horizontally in the working space, is humidified with steam.

8. Device for carrying out the method according to one or more of Claims 1 to 7, **characterized in that** the working space contains at least one infrared emitter (13) for radiating selective converted infrared radiation (5), **characterized in that** the latter comprises a functional body (3) made of a ceramic material and a support (2) made of a support material, the ceramic material containing at least one component from the following group: Al₂O₃, B₂O₃, CaO, CaCO₃, CaZrO₃, CeO₃, Cr₂O₃, CuO, FeO, Fe₂O₃, Fe₃O₄, Gd₂O₃, LaAl₂O₄, MgAl₂O₄, MgCa₂O₄, MgO, SiO₂, YCa₂O₃ and ZrO₂.

9. Device according to Claim 8, **characterized in that** the functional body (3) is a layer applied onto the support (2) by means of plasma coating.

10. Device according to Claim 8, **characterized in that** the functional body (3) is a layer applied onto the support (2) by means of vacuum evaporation.

11. Device according to one of Claims 8 to 10, **characterized in that** the functional body (3) consists of a layer, which consists essentially of one component, on the support (2).

12. Device according to one of Claims 8 to 10, **characterized in that** the functional body (3) is a layer, comprising at least two individual layers, on the support (2), the individual layers essentially consisting of one component each.

13. Device according to one of Claims 8 to 10, **characterized in that** the functional body (3) is a layer, which consists of an alloy of at least two components, on the support (2).

14. Device according to one of Claims 8 to 13, **characterized in that** the layer has a thickness < 1 mm.

15. Device according to one of Claims 8 to 14, **characterized in that** the support material contains at least one component from the following group: Al₂O₃, B₂O₃, CaO, CaCO₃, CaZrO₃, CeO₃, Cr₂O₃, CuO, FeO, Fe₂O₃, Fe₃O₄, Gd₂O₃, LaAl₂O₄, MgAl₂O₄, MgCa₂O₄, MgO, SiO₂, YCa₂O₃ and ZrO₂.

16. Device according to one of Claims 8 to 15, **characterized in that** the components have a purity of between 50% and 98%.

17. Device according to one of Claims 8 to 16, **characterized in that** the functional material contains from 15 to 35 wt% Al₂O₃, from 5 to 55 wt% Ca₂O₃ and from 30 to 60 wt% SiO₂.

18. Device according to one of Claims 8 to 17, **characterized in that** the functional material contains from 2 to 7 wt% CaO, from 30 to 50 wt% Ca₂O₄, from 30 to 40 wt% Fe₂O₃, from 3 to 7 wt% MgO and from 10 to 20 wt% SiO₂.

19. Device according to one of Claims 8 to 18, **characterized in that** the functional material contains essentially SiO₂.

20. Device according to one of Claims 8 to 19, **characterized in that** the support material contains essentially steel.

21. Device according to Claim 8 comprising an infrared emitter formed as a bar radiator, **characterized in that** an outer side of a tubular ceramic support (2) is provided with a functional ceramic layer (3), the interior of the ceramic support (2) containing a core (1) which has capillaries (6) extending in the longitudinal direction, and heating instruments (7) being assigned to the capillaries (6), a reflector (4) for directing infrared radiation (5) onto food (14) to be heat-treated being positioned at a defined distance from the ceramic support (2).

22. Device according to Claim 21, **characterized in that** it has an emitter diameter d of between 6 mm and 20 mm and a reflector aperture b_{R} of between 40 mm and 200 mm, a reflector height h lies in the range of between 400 mm and 100 mm, the emitter length lies between 250 and 1600 mm, the emitter power per emitter length lies between 0.1 kW/m and 2 kW/m and the emitter power expressed in terms of the emitter area is between 1.25 kW/m² and 100 kW/m².

23. Device according to Claim 21, **characterized in that** the core 1 is made of ceramic material, preferably Al₂O₃, and contains at least one capillary (6).

24. Device according to Claim 21, **characterized in that** elongate nickel-chromium resistor wires (10) functioning as heating instruments are introduced into the capillaries (6) of the core (1), a minimal temperature deviation ≤ 5% expressed in terms of the entire length of the emitter being achieved by the dimensioning of the core (1), the at least one capillary (6) and the nickel-chromium resistor wires (10).

25. Device according to Claim 21, **characterized in that** the core (1) supplemented with the nickel-chromium resistor wires (10) can be fitted into the ceramic support (2).

26. Device according to Claim 21, **characterized in that** the ceramic support (2) comprises a quartz material such as for example crystalline SiO₂ or is made of stainless steel or a ceramic, in particular Al₂O₃ with a purity of between 50% and 99.95% and, when using ceramic material or quartz material, the core (1) and the ceramic carrier (2) constitute one component.

27. Device according to Claim 21, **characterized in that** the functional ceramic layer (3) is applied adheringly as a thin sintered layer with a thickness of between 5 µm and 30 µm onto the surface of the ceramic support (2).

28. Device according to Claim 21, **characterized in that** the temperature of the functional ceramic (3) lies between 100°C and 1000°C and generates a total amount of radiation intensity per unit area which lies in the wavelength ranges of between 1.5 µm and 9.5 µm.

29. Device according to Claim 21, **characterized in that** the reflectors (4) have a surface which is shaped approximately parabolically.

30. Device according to Claim 29, **characterized in that** the reflectors (4) are made of stainless steel with a polished surface and a reflectivity of about 95%, or the reflectors (4) are made of an aluminium alloy with a reflectivity of about 99%, or the reflectors (4) are made of steel and are coated with gold or silver and have a reflectivity of about 99%.

31. Device according to Claim 8 comprising an infrared emitter (13) formed as a flat radiator, **characterized in that** a housing (9), which is open on one side, is filled layer-wise as seen in the radiation direction with thermal insulation (8), an energy system (7), a ceramic support (2) and a functional ceramic (3), with selectively converted infrared radiation (5) emerging on the open side of the housing (9).

32. Device according to Claim 31, **characterized in that** it has an emitter width bE of between 40 mm and 1600 mm, an emitter length 1 of between 250 mm and 4000 mm and an emitter spacing s of between 10 mm and 300 mm, the emitter power per emitter area being between 1.25 kW/m² and 100 kW/m².

33. Device according to Claim 31, **characterized in that** the ceramic support (2) is made of a breakproof crystalline silicon oxide (ceramic glass) or of stainless steel or high-strength ceramic, in particular Al₂O₃ with a purity of between 50% and 99.95%.

34. Device according to Claim 31, **characterized in that** the energy system (7), based on electrical energy, comprises a plate-shaped ceramic panel (11) in which capillaries (6) are formed, nickel-chromium resistor wires (10) in elongate form being introduced into the latter.

35. Device according to Claim 31, **characterized in that** the energy system (7), based on liquid or gaseous energy carriers, is formed as a flat plate thermal container (12) having an inflow and outflow and the medium used flows at a temperature of between 80°C and 800°C through the plate thermal container (12), the latter having a functional ceramic (3) on a side facing towards a working space while the opposite side is thermally insulated.

36. Device according to Claim 8 comprising an infrared emitter (13) formed as a tube emitter, **characterized in that** the support (2) is tubularly shaped and encloses the heating system (7), the ceramic support (2) being coated on its outside with a functional ceramic layer (3) for radiation of selectively converted infrared radiation (5) on all sides.

37. Method according to Claim 1, **characterized in that** the food (14) to be heat-treated is kept warm by selectively converted infrared radiation (5) within a temperature range of the food to be heat-treated of between 40°C and 80°C.

38. Method according to Claim 1, **characterized in that** when baking bread roll dough portions by treatment with selectively converted infrared radiation (5), the substeps of pre-baking and final baking in the baking process can be separated from one another arbitrarily in time.

## Revendications

1. Procédé pour rissoler, cuire, griller ou frire des aliments (14) ou le séchage de ceux-ci dans un four ou analogue, présentant les étapes de procédé suivantes :
a) génération d'un rayonnement électromagnétique dans un émetteur primaire avec alimentation d'énergie électrique, chimique ou thermique,
b) chauffage d'une couche céramique fonctionnelle (3), en matériau céramique, qui contient au moins un composant du groupe suivant : Al₂O₃, B₂O₃, CaO, CaCO₃, CaZrO₃, CeO₃, Cr₂O₃, CuO, FeO, Fe₂O₃, Fe₃O₄, Gd₂O₃, LaAl₂O₄, MgAl₂O₄, MgCa₂O₄, MgO, SiO₂, YCa₂O₃ et ZrO₂, de l'émetteur (13) par irradiation et/ou transfert de chaleur de l'émetteur primaire pour la génération d'un rayonnement infrarouge transformé sélectivement et
c) irradiation de l'aliment à traiter (14) par le rayonnement infrarouge transformé sélectivement (5) dans une plage de longueurs d'onde λ = 3,1 µm à λ = 3,6 µm ou λ = 2,7 µm à λ = 3,1 µm, l'aliment (14) à traiter thermiquement par le rayonnement infrarouge (5) transformé sélectivement étant irradié, par rapport à l'espace de travail, d'un côté ou de plusieurs côtés, horizontalement, verticalement en biais, au repos ou en mouvement, et
d) les molécules d'eau contenues dans l'aliment (14) à traiter thermiquement, qui absorbent de préférence dans la plage spectrale de λ = 2,7 µm à λ = 3,1 µm, ne sont pas excitées et l'aliment (14) à traiter thermiquement est moins déshydraté.

2. Procédé selon la revendication 1, **caractérisé en ce que** les molécules d'hydrocarbures contenues dans l'aliment (14) à traiter thermiquement, qui absorbent de préférence dans la plage spectrale de λ = 3,2 µm à λ = 3,5 µm, ne sont pas excitées et donc pas dégradées et sont donc séchées de manière ménagée dans la plage de λ = 2,7 µ à λ = 3,1 µm.

3. Procédé selon la revendication 1, **caractérisé en ce que** l'aliment (14) à traiter thermiquement, se trouvant dans l'espace de travail, est irradié, par rapport à l'aliment se trouvant à l'horizontale, à partir du bas et du haut par le rayonnement infrarouge transformé sélectivement (5).

4. Procédé selon la revendication 1, **caractérisé en ce que** l'aliment (14) à traiter thermiquement, se trouvant sensiblement à la verticale dans un espace de travail, est irradié à partir de la gauche et de la droite et/ou par l'arrière par le rayonnement infrarouge transformé sélectivement (5).

5. Procédé selon la revendication 1, **caractérisé en ce qu'**un aliment (14) à traiter thermiquement, déplacé en continu ou de manière discontinue dans l'espace de travail est irradié par le rayonnement infrarouge transformé sélectivement (5) à une distance entre 10 mm et 100 mm.

6. Procédé selon la revendication 1, **caractérisé en ce que** l'aliment (14) se trouvant au repos, soit à l'horizontale, soit à la verticale dans l'espace de travail est irradié par le rayonnement infrarouge transformé sélectivement (5) à une distance entre 100 mm et 200 mm.

7. Procédé selon la revendication 1, **caractérisé en ce que** l'aliment (14) à traiter thermiquement, se trouvant à la verticale ou à l'horizontale dans l'espace de travail est humidifié par de la vapeur.

8. Dispositif pour réaliser le procédé selon l'une ou plusieurs des revendications 1 à 7, **caractérisé en ce qu'**au moins un émetteur d'infrarouges (13) destiné à émettre un rayonnement infrarouge transformé sélectivement (5) est placé dans l'espace de travail, **caractérisé en ce qu'**il présente un corps fonctionnel (3) en matériau céramique et un support (2) en matériau support, le matériau céramique contenant au moins un composant du groupe suivant : Al₂O₃, B₂O₃, CaO, CaCO₃, CaZrO₃, CeO₃, Cr₂O₃, CuO, FeO, Fe₂O₃, Fe₃O₄, Gd₂O₃, LaAl₂O₄, MgAl₂O₄, MgCa₂O₄, MgO, SiO₂, YCa₂O₃ et ZrO₂.

9. Dispositif selon la revendication 8, **caractérisé en ce que** le corps fonctionnel (3) est une couche appliquée au moyen d'un revêtement au plasma sur le support (2).

10. Dispositif selon la revendication 8, **caractérisé en ce que** le corps fonctionnel (3) est une couche appliquée au moyen d'une vaporisation sous vide sur le support (2).

11. Dispositif selon l'une quelconque des revendications 8 à 10, **caractérisé en ce que** le corps fonctionnel (3) est une couche sur le support (2), qui est essentiellement constituée d'un composant.

12. Dispositif selon l'une quelconque des revendications 8 à 10, **caractérisé en ce que** le corps fonctionnel (3) est une couche sur le support (2), présentant au moins deux couches individuelles, les couches individuelles étant essentiellement constituées chacune d'un composant.

13. Dispositif selon les revendications 8 à 10, **caractérisé en ce que** le corps fonctionnel (3) est une couche sur le support (2), qui est constituée par un alliage d'au moins deux composants.

14. Dispositif selon l'une quelconque des revendications 8 à 13, **caractérisé en ce que** la couche présente une épaisseur < 1 mm.

15. Dispositif selon l'une quelconque des revendications 8 à 14, **caractérisé en ce que** le matériau support contient au moins un composant du groupe suivant : Al₂O₃, B₂O₃, CaO, CaCO₃, CaZrO₃, CeO₃, Cr₂O₃, CuO, FeO, Fe₂O₃, Fe₃O₄, Gd₂O₃, LaAl₂O₄, MgAl₂O₄, MgCa₂O₄, MgO, SiO₂, YCa₂O₃ et ZrO₂.

16. Dispositif selon l'une quelconque des revendications 8 à 15, **caractérisé en ce que** les composants présentent un degré de pureté entre 50% et 98%.

17. Dispositif selon l'une quelconque des revendications 8 à 16, **caractérisé en ce que** le matériau fonctionnel contient 15 à 35% en poids d'Al₂O₃, 5 à 55% en poids de Ca₂O₃ et 30 à 60% en poids de SiO₂.

18. Dispositif selon l'une quelconque des revendications 8 à 17, **caractérisé en ce que** le matériau fonctionnel contient 2 à 7% en poids de CaO, 30 à 50% en poids de Ca₂O₄, 30 à 40% en poids de Fe₂O₃, 3 à 7% en poids de MgO et 10 à 20% en poids de SiO₂.

19. Dispositif selon l'une quelconque des revendications 8 à 18, **caractérisé en ce que** le matériau fonctionnel contient essentiellement du SiO₂.

20. Dispositif selon l'une quelconque des revendications 8 à 19, **caractérisé en ce que** le matériau support contient essentiellement de l'acier.

21. Dispositif selon la revendication 8 présentant un émetteur infrarouge, réalisé sous forme d'émetteur en barre, **caractérisé en ce qu'**une face extérieure d'un support en céramique (2) tubulaire est pourvue d'une couche céramique fonctionnelle (3), un noyau (1) étant situé dans l'espace intérieur du support en céramique (2), qui présente des capillaires (6) s'étendant dans le sens longitudinal et les capillaires (6) sont associés à des dispositifs chauffants (7), un réflecteur (4) étant positionné à une distance définie du support en céramique (2), pour orienter le rayonnement infrarouge (5) sur l'aliment (14) à traiter thermiquement.

22. Dispositif selon la revendication 21, **caractérisé en ce que** celui-ci présente un diamètre d'émetteur d entre 6 mm et 20 mm, une ouverture du réflecteur b_{R} entre 40 mm et 200 mm, une hauteur du réflecteur h dans la plage entre 400 mm et 100 mm, la longueur de l'émetteur se situe entre 250 et 1600 mm et la puissance de l'émetteur par longueur d'émetteur est se situe entre 0,1 kW/m et 2 kW/m et la puissance de l'émetteur, par rapport à la surface de l'émetteur, vaut entre 1,25 kW/m² et 100 kW/m².

23. Dispositif selon la revendication 21, **caractérisé en ce que** le noyau (1) est réalisé en matériau céramique, de préférence en Al₂O₃, et contient au moins un capillaire (6).

24. Dispositif selon la revendication 21, **caractérisé en ce que** des fils de résistance en nickel-chrome (10) allongés fonctionnant comme dispositif chauffant sont introduits dans les capillaires (6) du noyau (1), une déviation de température minimale ≤ 5% par rapport à la longueur totale de l'émetteur étant obtenu par le dimensionnement du noyau (1) et dudit au moins un capillaire (6) ainsi que des fils de résistance en nickel-chrome (10).

25. Dispositif selon la revendication 21, **caractérisé en ce que** le noyau (1) complété par les fils de résistance en nickel-chrome (10) peut être disposé dans le support en céramique (2).

26. Dispositif selon la revendication 21, **caractérisé en ce que** le support en céramique (2) comprend un matériau à base de quartz tel que par exemple du SiO₂ cristallin, ou est réalisé en acier inoxydable ou en céramique, en particulier en Al₂O₃ présentant un degré de pureté entre 50% et 99,95% et lors de l'utilisation de matériau céramique ou de matériau à base de quartz, le noyau (1) et le support en céramique (2) forment un module.

27. Dispositif selon la revendication 21, **caractérisé en ce que** la couche céramique fonctionnelle (3) est appliquée par adhérence sous forme de couche mince frittée, en une épaisseur entre 5 µm et 30 µm à la surface du support en céramique (2).

28. Dispositif selon la revendication 21, **caractérisé en ce que** la température de la céramique fonctionnelle (3) se situe entre 100°C et 1000°C et génère une quantité totale d'intensité de rayonnement par unité de surface qui se situe dans des plages de longueurs d'onde entre 1,5 µm et 9,5 µm.

29. Dispositif selon la revendication 21, **caractérisé en ce que** les réflecteurs (4) présentent une surface présentant une réalisation quasiment parabolique.

30. Dispositif selon la revendication 29, **caractérisé en ce que** les réflecteurs (4) en acier noble sont réalisés avec une surface polie et une valeur de réflexion d'environ 95% ou les réflecteurs (4) sont réalisés en un alliage d'aluminium présentant une valeur de réflexion d'environ 99% ou les réflecteurs (4) sont en acier et revêtus d'or ou d'argent et présentent une valeur de réflexion d'environ 99%.

31. Dispositif selon la revendication 8 présentant un émetteur infrarouge (13) qui est réalisé sous forme d'émetteur plat, **caractérisé en ce qu'**un châssis (9) ouvert vers un côté est rempli, par couches, dans le sens du rayonnement, d'une isolation thermique (8), d'un système d'énergie (7), d'un support en céramique (2) et d'une céramique fonctionnelle (3), les rayonnements infrarouges transformés sélectivement (5) sortant par le côté ouvert du châssis (9).

32. Dispositif selon la revendication 31, **caractérisé en ce qu'**il présente une largeur d'émetteur b_{E} entre 40 mm et 1600 mm, une longueur d'émetteur 1 entre 250 mm et 4000 mm et une distance d'émetteur s entre 10 mm et 300 mm, la puissance de l'émetteur par surface de l'émetteur valant entre 1,25 kW/m² et 100 kW/m².

33. Dispositif selon la revendication 31, **caractérisé en ce que** le support en céramique (2) est réalisé en un oxyde de silicium cristallin résistant à la rupture (verre céramique) ou en acier inoxydable ou en céramique hautement résistante, en particulier en Al₂O₃ présentant un degré de pureté entre 50% et 99,95%.

34. Dispositif selon la revendication 31, **caractérisé en ce que** le système d'énergie (7) à base d'énergie électrique comprend une tablette en céramique (11) en forme de plaque, dans laquelle sont introduits des capillaires (6) dans lesquels sont insérés les fils de résistance en nickel-chrome (10) sous forme allongée.

35. Dispositif selon la revendication 31, **caractérisé en ce que** le système d'énergie (7) à base de supports d'énergie liquides ou, selon le cas, gazeux est réalisé sous forme de thermo-récipient à plaques, plat (12) pourvu d'un flux alimenté et d'un flux de sortie, et le thermo-récipient à plaques (12) est traversé par l'agent utilisé à une température entre 80°C et 800°C et présente, sur un côté orienté vers l'espace de travail une céramique fonctionnelle (3) alors que la face opposée est thermiquement isolée.

36. Dispositif selon la revendication 8 présentant un émetteur infrarouge (13) qui est réalisé sous forme d'émetteur à tube, **caractérisé en ce que** le support (2) est réalisé sous forme tubulaire et entoure le système de chauffage (7), le support en céramique (2) étant revêtu sur sa face extérieure d'une couche céramique fonctionnelle (3) pour l'émission dans tous les sens de rayonnement infrarouge transformé sélectivement (5).

37. Procédé selon la revendication 1, **caractérisé en ce que** l'aliment (14) à traiter thermiquement est maintenu chaud par le rayonnement infrarouge transformé sélectivement (5) dans une plage de température de l'aliment à traiter thermiquement de 40°C à 80°C.

38. Procédé selon la revendication 1, **caractérisé en ce que** lors de la cuisson de pâtons de pain, par le traitement par le rayonnement infrarouge transformé sélectivement (5), les étapes partielles de précuisson et de cuisson du processus de cuisson peuvent être séparées l'une de l'autre de manière quelconque dans le temps.
